# EUROPEAN PATENT APPLICATION

(11) **EP 3 147 778 A1**
(43) Date of publication of application: **29.03.2017**
(21) Application number: 14896488.5
(22) Date of filing: 30.06.2014
(51) Int. Cl.: G06F 9/44

(54) **INSTRUCTION SEQUENCE DETERMINATION METHOD AND ASSOCIATED DEVICE AND SYSTEM**

(71) Applicant: Huawei Technologies Co. Ltd., Shenzhen, Guangdong 518129 (CN)
(72) Inventor: LI, Nan, Shenzhen Guangdong 518129 (CN); WANG, Linchun, Shenzhen Guangdong 518129 (CN)
(74) Representative: Goddar, Heinz J.
(86) International application number: PCT/CN2014/081272
(87) International publication number: WO 2016/000171

(57) **Abstract**

A method for determining instruction sequences, a related device, and a system. A method for determining instruction sequences may include: acquiring a function identifier; and determining M1 instruction sequences used to implement a function identified by the function identifier, where each instruction sequence in the M1 instruction sequences includes a unique entry instruction, and each instruction sequence in the M1 instruction sequences includes a unique exit instruction, where M1 is a positive integer, and the M1 instruction sequences are instruction sequences for creating a network packet processing program used to process a network packet. Solutions of embodiments of the present invention are advantageous for improving an extent of matching between a packet forwarding processing device and an instruction sequence that is executed by the packet forwarding processing device and used to process a network packet, and reducing an amount of invalid code run by the packet forwarding processing device.

## Description

### TECHNICAL FIELD

The present invention relates to the field of computer technologies, and in particular, to a method for determining and obtaining instruction sequences, a related device, and a system.

### BACKGROUND

Currently, in packet forwarding processing devices (for example, routers and network switches), generally network processors are used to implement forwarding processing of network packets. A network processor is a programmable processor dedicated to processing of network packets.

A network packet processing program may be compiled by using an assembly language or an advanced language, and the network processor implements related forwarding processing of network packets by executing the network packet processing program. For example, in protocol oblivious forwarding, generally a forwarding process of a network packet is abstracted as a series of "match-action" operations, and this series of "match-action" operations may be converted by translation into a network packet processing program, which is then run on the network processor. Generally a network packet processing program installed and run in a packet forwarding device such as a router or a switch needs to support forwarding processing of dozens or even hundreds of different network protocols, while each network protocol may relate to multiple different packet forwarding scenarios, and different packet forwarding actions needs to be performed. Therefore, generally the network packet processing program installed and run in the packet forwarding device becomes quite complex. However, generally the network packet processing program is designed to be quite complex, which tends to introduce many program vulnerabilities. In addition, if more protocols and functions are supported, requirements on chip performance of the network processor are also higher.

### SUMMARY

Embodiments of the present invention provide a method for determining instruction sequences, a related device, and a system, to improve an extent of matching between a packet forwarding processing device and an instruction sequence that is executed by the packet forwarding processing device and used to process a network packet, and reduce an amount of invalid code run by the packet forwarding processing device.

According to a first aspect, a method for determining instruction sequences may include:
acquiring a function identifier; and
determining M1 instruction sequences used to implement a function identified by the function identifier, where each instruction sequence in the M1 instruction sequences includes a unique entry instruction, and each instruction sequence in the M1 instruction sequences includes a unique exit instruction, where M1 is a positive integer, and the M1 instruction sequences are instruction sequences for creating a network packet
processing program used to process a network packet.

With reference to the first aspect, in a first possible implementation manner of the first aspect,
the method further includes:
   creating the network packet processing program, generating a program upgrade patch by using the created network packet processing program, and sending the program upgrade patch to a packet forwarding processing device; or creating the network packet processing program, and sending the network packet processing program to a packet forwarding processing device; or creating the network packet processing program, and installing the network packet processing program;
   where the network packet processing program includes the M1 instruction sequences.

With reference to the first possible implementation manner of the first aspect, in a second possible implementation manner of the first aspect,
the method further includes: acquiring X1 items, where a mapping between the X1 items and X1 tables is a one-to-one correspondence; and determining X1 instruction sequences used to implement a table lookup function for the X1 tables, where a mapping between the X1 instruction sequences and the X1 tables is a one-to-one correspondence, the network packet processing program further includes the X1 instruction sequences, and the X1 is a positive integer.

With reference to the second possible implementation manner of the first aspect, in a third possible implementation manner of the first aspect,
a first item includes at least one type of the following information: an identifier of a first table, the first table, and one instruction sequence used to implement the table lookup function for the first table, where the first item is any one item in the X1 items.

With reference to the second possible implementation manner of the first aspect or the third possible implementation manner of the first aspect, in a fourth possible implementation manner of the first aspect, the M1 instruction sequences are bijective to M1 directed edges in a valid directed graph for data flow forwarding, and the X1 tables are bijective to X1 nodes in the valid directed graph for data flow forwarding;
the valid directed graph for data flow forwarding includes X nodes and M directed edges, where the M directed edges are bijective to M instruction sequences, the X nodes are bijective to X tables, the M1 directed edges are a subset in a set of the M directed edges, the X1 nodes are a subset in a set of the X nodes, and the M and the X are positive integers; and
a next instruction of an exit instruction in an instruction sequence corresponding to an incoming edge of a node i1 in the X nodes is an entry instruction in an instruction sequence used to implement the table lookup function for a table corresponding to the node i1, and a previous instruction of an entry instruction in an instruction sequence corresponding to an outgoing edge of a node j1 in the X nodes is an exit instruction in an instruction sequence used to implement the table lookup function for a table corresponding to the node j1, where the node i1 is any one node in the X nodes, and the node j 1 is any one node in the X nodes.

With reference to the fourth possible implementation manner of the first aspect, in a fifth possible implementation manner of the first aspect, the network packet processing program further includes M2 instruction sequences used to support implementation of the function identified by the function identifier, where the M2 instruction sequences are a subset of the M instruction sequences, the M2 is a positive integer, and an intersection between a set of the M1 instruction sequences and a set of the M2 instruction sequences is an empty set.

With reference to the fourth possible implementation manner of the first aspect or the fifth possible implementation manner of the first aspect, in a sixth possible implementation manner of the first aspect,
the network packet processing program further includes X2 instruction sequences used to support implementation of the table lookup function for the X1 tables, where a mapping between the X2 instruction sequences and X2 tables is a one-to-one correspondence, the X2 tables are a subset of the X tables, the X2 is a positive integer, and an intersection between a set of the X1 instruction sequences and a set of the X2 instruction sequences is an empty set.

With reference to the fourth possible implementation manner of the first aspect or the fifth possible implementation manner of the first aspect or the sixth possible implementation manner of the first aspect, in a seventh possible implementation manner of the first aspect, the valid directed graph for data flow forwarding is obtained by pruning nodes and/or directed edges in an initial directed graph for data flow forwarding, where the initial directed graph for data flow forwarding includes X0 nodes and M0 directed edges, where a mapping between the M0 directed edges and M0 instruction sequences is a one-to-one correspondence, a mapping between the X0 nodes and X0 tables is a one-to-one correspondence, the set of the M directed edges is a subset in a set of the M0 directed edges, the set of the X nodes is a subset in a set of the X0 nodes, and the M0 and the X0 are positive integers.

With reference to the seventh possible implementation manner of the first aspect, in an eighth possible implementation manner of the first aspect, the determining M1 instruction sequences used to implement a function identified by the function identifier includes: determining, in the M0 instruction sequences, M1 instruction sequences that match the function identifier by using the function identifier as an index.

With reference to the seventh possible implementation manner of the first aspect or the eighth possible implementation manner of the first aspect, in a ninth possible implementation manner of the first aspect,
the method further includes: acquiring an application scenario identifier, where the M0 instruction sequences are M0 instruction sequences identified by the application scenario identifier.

With reference to the fourth possible implementation manner of the first aspect or the fifth possible implementation manner of the first aspect or the sixth possible implementation manner of the first aspect or the seventh possible implementation manner of the first aspect or the eighth possible implementation manner of the first aspect or the ninth possible implementation manner of the first aspect, in a tenth possible implementation manner of the first aspect,
the creating the network packet processing program includes: creating the network packet processing program based on the directed edges and the nodes in the valid directed graph for data flow forwarding.

With reference to the second possible implementation manner of the first aspect or the third possible implementation manner of the first aspect, in an eleventh possible implementation manner of the first aspect, a next instruction of an exit instruction in an instruction sequence in the M1 instruction sequences is an entry instruction in an instruction sequence in the X1 instruction sequences, and/or a previous instruction of an entry instruction in an instruction sequence in the M1 instruction sequences is an exit instruction in an instruction sequence in the X1 instruction sequences.

With reference to the eleventh possible implementation manner of the first aspect, in a twelfth possible implementation manner of the first aspect, the network packet processing program further includes M2 instruction sequences used to support implementation of the function identified by the function identifier, where the M2 is a positive integer, and an intersection between a set of the M1 instruction sequences and a set of the M2 instruction sequences is an empty set, where a next instruction of an exit point in an instruction sequence in the M2 instruction sequences is an entry instruction in an instruction sequence in the X1 instruction sequences, and/or a previous instruction of an entry instruction in an instruction sequence in the M2 instruction sequences is an exit instruction in an instruction sequence in the X1 instruction sequences.

With reference to the twelfth possible implementation manner of the first aspect, in a thirteenth possible implementation manner of the first aspect, the network packet processing program further includes X2 instruction sequences used to support implementation of the table lookup function for the X1 tables, where the X2 is a positive integer, and an intersection between a set of the X1 instruction sequences and a set of the X2 instruction sequences is an empty set;
where a next instruction of an exit instruction in an instruction sequence in the M1 instruction sequences or the M2 instruction sequences is an entry instruction in an instruction sequence in the X2 instruction sequences, and/or a previous instruction of an entry instruction in an instruction sequence in the M1 instruction sequences or the M2 instruction sequences is an exit instruction in an instruction sequence in the X2 instruction sequences.

According to a second aspect, an apparatus for determining instruction sequences includes:
an acquiring unit, configured to acquire a function identifier; and
a determining unit, configured to determine M1 instruction sequences used to implement a function identified by the function identifier acquired by the acquiring unit, where each instruction sequence in the M1 instruction sequences includes a unique entry instruction, and each instruction sequence in the M1 instruction sequences includes a unique exit instruction, where M1 is a positive integer, and the M1 instruction sequences are instruction sequences for creating a network packet
processing program used to process a network packet.

With reference to the second aspect, in a first possible implementation manner of the second aspect,
the apparatus for determining instruction sequences further includes:
   a program unit, configured to create the network packet processing program, generate a program upgrade patch by using the created network packet processing program, and send the program upgrade patch to a packet forwarding processing device; or create the network packet processing program, and send the network packet processing program to a packet forwarding processing device; or create the network packet processing program, and install the network packet processing program; where the network packet processing program includes the M1 instruction sequences.

With reference to the first possible implementation manner of the second aspect, in a second possible implementation manner of the second aspect,
the acquiring unit is further configured to acquire X1 items, where a mapping between the X1 items and X1 tables is a one-to-one correspondence; and
the determining unit is further configured to determine X1 instruction sequences used to implement a table lookup function for the X1 tables, where a mapping between the X1 instruction sequences and the X1 tables is a one-to-one correspondence, the network packet processing program further includes the X1 instruction sequences, and the X1 is a positive integer.

With reference to the second possible implementation manner of the second aspect, in a third possible implementation manner of the second aspect, the M1 instruction sequences are bijective to M1 directed edges in a valid directed graph for data flow forwarding, and the X1 tables are bijective to X1 nodes in the valid directed graph for data flow forwarding;
the valid directed graph for data flow forwarding includes X nodes and M directed edges, where the M directed edges are bijective to M instruction sequences, the X nodes are bijective to X tables, the M1 directed edges are a subset in a set of the M directed edges, the X1 nodes are a subset in a set of the X nodes, and the M and the X are positive integers; and
a next instruction of an exit instruction in an instruction sequence corresponding to an incoming edge of a node i1 in the X nodes is an entry instruction in an instruction sequence used to implement the table lookup function for a table corresponding to the node i1, and a previous instruction of an entry instruction in an instruction sequence corresponding to an outgoing edge of a node j 1 in the X nodes is an exit instruction in an instruction sequence used to implement the table lookup function for a table corresponding to the node j1, where the node i1 is any one node in the X nodes, and the node j1 is any one node in the X nodes.

With reference to the third possible implementation manner of the second aspect, in a fourth possible implementation manner of the second aspect,
the network packet processing program further includes M2 instruction sequences used to support implementation of the function identified by the function identifier, where the M2 instruction sequences are a subset of the M instruction sequences, the M2 is a positive integer, and an intersection between a set of the M1 instruction sequences and a set of the M2 instruction sequences is an empty set.

With reference to the third possible implementation manner of the second aspect or the fourth possible implementation manner of the second aspect, in a fifth possible implementation manner of the second aspect,
the network packet processing program further includes X2 instruction sequences used to support implementation of the table lookup function for the X1 tables, where a mapping between the X2 instruction sequences and X2 tables is a one-to-one correspondence, the X2 tables are a subset of the X tables, the X2 is a positive integer, and an intersection between a set of the X1 instruction sequences and a set of the X2 instruction sequences is an empty set.

With reference to the second possible implementation manner of the second aspect or the third possible implementation manner of the second aspect, in a sixth possible implementation manner of the second aspect, a next instruction of an exit instruction in an instruction sequence in the M1 instruction sequences is an entry instruction in an instruction sequence in the X1 instruction sequences, and/or a previous instruction of an entry instruction in an instruction sequence in the M1 instruction sequences is an exit instruction in an instruction sequence in the X1 instruction sequences.

With reference to the sixth possible implementation manner of the second aspect, in a seventh possible implementation manner of the second aspect,
the network packet processing program further includes M2 instruction sequences used to support implementation of the function identified by the function identifier, where the M2 is a positive integer, and an intersection between a set of the M1 instruction sequences and a set of the M2 instruction sequences is an empty set, where a next instruction of an exit point in an instruction sequence in the M2 instruction sequences is an entry instruction in an instruction sequence in the X1 instruction sequences, and/or a previous instruction of an entry instruction in an instruction sequence in the M2 instruction sequences is an exit instruction in an instruction sequence in the X1 instruction sequences.

With reference to the seventh possible implementation manner of the second aspect, in an eighth possible implementation manner of the second aspect,
the network packet processing program further includes X2 instruction sequences used to support implementation of the table lookup function for the X1 tables, where the X2 is a positive integer, and an intersection between a set of the X1 instruction sequences and a set of the X2 instruction sequences is an empty set;
where a next instruction of an exit instruction in an instruction sequence in the M1 instruction sequences or the M2 instruction sequences is an entry instruction in an instruction sequence in the X2 instruction sequences, and/or a previous instruction of an entry instruction in an instruction sequence in the M1 instruction sequences or the M2 instruction sequences is an exit instruction in an instruction sequence in the X2 instruction sequences.

According to a third aspect, a management device includes:
a processor, a memory, and a network interface, where the processor, the memory, and the network interface are connected by using a communications bus, where:
   the memory is configured to store program code, and transmit the program code to the processor; and
   the processor is configured to execute the following steps according to the program code:
      acquire a function identifier; determine M1 instruction sequences used to implement a function identified by the function identifier; and create a network packet processing program, generate a program upgrade patch by using the created network packet processing program, and send the program upgrade patch to a packet forwarding processing device through the network interface; or create a network packet processing program, and send the network packet processing program to a packet forwarding processing device through the network interface, where each instruction sequence in the M1 instruction sequences includes a unique entry instruction, each instruction sequence in the M1 instruction sequences includes a unique exit instruction, M1 is a positive integer, and the network packet processing program includes the M1 instruction sequences.

With reference to the third aspect, in a first possible implementation manner of the third aspect,
the processor is further configured to acquire X1 items, where a mapping between the X1 items and X1 tables is a one-to-one correspondence; and determine X1 instruction sequences used to implement a table lookup function for the X1 tables, where a mapping between the X1 instruction sequences and the X1 tables is a one-to-one correspondence, the network packet processing program further includes the X1 instruction sequences, and the X1 is a positive integer.

With reference to the first possible implementation manner of the third aspect, in a second possible implementation manner of the third aspect, the M1 instruction sequences are bijective to M1 directed edges in a valid directed graph for data flow forwarding, and the X1 tables are bijective to X1 nodes in the valid directed graph for data flow forwarding;
the valid directed graph for data flow forwarding includes X nodes and M directed edges, where the M directed edges are bijective to M instruction sequences, the X nodes are bijective to X tables, the M1 directed edges are a subset in a set of the M directed edges, the X1 nodes are a subset in a set of the X nodes, and the M and the X are positive integers; and
a next instruction of an exit instruction in an instruction sequence corresponding to an incoming edge of a node i1 in the X nodes is an entry instruction in an instruction sequence used to implement the table lookup function for a table corresponding to the node i1, and a previous instruction of an entry instruction in an instruction sequence corresponding to an outgoing edge of a node j1 in the X nodes is an exit instruction in an instruction sequence used to implement the table lookup function for a table corresponding to the node j1, where the node i1 is any one node in the X nodes, and the node j 1 is any one node in the X nodes.

With reference to the second possible implementation manner of the third aspect, in a third possible implementation manner of the third aspect, the network packet processing program further includes M2 instruction sequences used to support implementation of the function identified by the function identifier, where the M2 instruction sequences are a subset of the M instruction sequences, the M2 is a positive integer, and an intersection between a set of the M1 instruction sequences and a set of the M2 instruction sequences is an empty set.

With reference to the second possible implementation manner of the third aspect or the third possible implementation manner of the third aspect, in a fourth possible implementation manner of the third aspect, the network packet processing program further includes X2 instruction sequences used to support implementation of the table lookup function for the X1 tables, where a mapping between the X2 instruction sequences and X2 tables is a one-to-one correspondence, the X2 tables are a subset of the X tables, the X2 is a positive integer, and an intersection between a set of the X1 instruction sequences and a set of the X2 instruction sequences is an empty set.

With reference to the second possible implementation manner of the third aspect or the third possible implementation manner of the third aspect or the fourth possible implementation manner of the third aspect, in a fifth possible implementation manner of the third aspect, the valid directed graph for data flow forwarding is obtained by pruning nodes and/or directed edges in an initial directed graph for data flow forwarding, where the initial directed graph for data flow forwarding includes X0 nodes and M0 directed edges, where a mapping between the M0 directed edges and M0 instruction sequences is a one-to-one correspondence, a mapping between the X0 nodes and X0 tables is a one-to-one correspondence, the set of the M directed edges is a subset in a set of the M0 directed edges, the set of the X nodes is a subset in a set of the X0 nodes, and the M0 and the X0 are positive integers.

With reference to the fifth possible implementation manner of the third aspect, in a sixth possible implementation manner of the third aspect, the processor is further configured to acquire an application scenario identifier, where the M0 instruction sequences are M0 instruction sequences identified by the application scenario identifier.

With reference to the second possible implementation manner of the third aspect or the third possible implementation manner of the third aspect or the fourth possible implementation manner of the third aspect or the fifth possible implementation manner of the third aspect or the sixth possible implementation manner of the third aspect, in a seventh possible implementation manner of the third aspect, the processor is configured to create the network packet processing program based on the directed edges and the nodes in the valid directed graph for data flow forwarding.

With reference to the first possible implementation manner of the third aspect, in an eighth possible implementation manner of the third aspect, a next instruction of an exit instruction in an instruction sequence in the M1 instruction sequences is an entry instruction in an instruction sequence in the X1 instruction sequences, and/or a previous instruction of an entry instruction in an instruction sequence in the M1 instruction sequences is an exit instruction in an instruction sequence in the X1 instruction sequences.

With reference to the eighth possible implementation manner of the third aspect, in a ninth possible implementation manner of the third aspect, the network packet processing program further includes M2 instruction sequences used to support implementation of the function identified by the function identifier, where the M2 is a positive integer, and an intersection between a set of the M1 instruction sequences and a set of the M2 instruction sequences is an empty set, where a next instruction of an exit point in an instruction sequence in the M2 instruction sequences is an entry instruction in an instruction sequence in the X1 instruction sequences, and/or a previous instruction of an entry instruction in an instruction sequence in the M2 instruction sequences is an exit instruction in an instruction sequence in the X1 instruction sequences.

With reference to the ninth possible implementation manner of the third aspect, in a tenth possible implementation manner of the third aspect,
the network packet processing program further includes X2 instruction sequences used to support implementation of the table lookup function for the X1 tables, where the X2 is a positive integer, and an intersection between a set of the X1 instruction sequences and a set of the X2 instruction sequences is an empty set;
where a next instruction of an exit instruction in an instruction sequence in the M1 instruction sequences or the M2 instruction sequences is an entry instruction in an instruction sequence in the X2 instruction sequences, and/or a previous instruction of an entry instruction in an instruction sequence in the M1 instruction sequences or the M2 instruction sequences is an exit instruction in an instruction sequence in the X2 instruction sequences.

According to a fourth aspect, a packet forwarding processing device includes:
a processor, a network processor, a memory, and a network interface, where the processor, the network processor, the memory, and the network interface are connected by using a communications bus, where:
   the memory is configured to store program code, and transmit the program code to the processor;
   the processor is configured to execute the following steps according to the program code: acquire a function identifier, determine M1 instruction sequences used to implement a function identified by the function identifier, create a network packet processing program, and install the network packet processing program into the network processor, where each instruction sequence in the M1 instruction sequences includes a unique entry instruction, each instruction sequence in the M1 instruction sequences includes a unique exit instruction, M1 is a positive integer, and the network packet processing program includes the M1 instruction sequences; and
   the network processor is configured to install the network packet processing program, and process, according to the network packet processing program, a network packet received from the network interface.

With reference to the fourth aspect, in a first possible implementation manner of the fourth aspect,
the processor is further configured to acquire X1 items, where a mapping between the X1 items and X1 tables is a one-to-one correspondence; and determine X1 instruction sequences used to implement a table lookup function for the X1 tables, where a mapping between the X1 instruction sequences and the X1 tables is a one-to-one correspondence, the network packet processing program further includes the X1 instruction sequences, and the X1 is a positive integer.

With reference to the first possible implementation manner of the fourth aspect, in a second possible implementation manner of the fourth aspect, the M1 instruction sequences are bijective to M1 directed edges in a valid directed graph for data flow forwarding, and the X1 tables are bijective to X1 nodes in the valid directed graph for data flow forwarding;
the valid directed graph for data flow forwarding includes X nodes and M directed edges, where the M directed edges are bijective to M instruction sequences, the X nodes are bijective to X tables, the M1 directed edges are a subset in a set of the M directed edges, the X1 nodes are a subset in a set of the X nodes, and the M and the X are positive integers; and
a next instruction of an exit instruction in an instruction sequence corresponding to an incoming edge of a node i1 in the X nodes is an entry instruction in an instruction sequence used to implement the table lookup function for a table corresponding to the node i1, and a previous instruction of an entry instruction in an instruction sequence corresponding to an outgoing edge of a node j 1 in the X nodes is an exit instruction in an instruction sequence used to implement the table lookup function for a table corresponding to the node j1, where the node i1 is any one node in the X nodes, and the node j 1 is any one node in the X nodes.

With reference to the second possible implementation manner of the fourth aspect, in a third possible implementation manner of the fourth aspect, the network packet processing program further includes M2 instruction sequences used to support implementation of the function identified by the function identifier, where the M2 instruction sequences are a subset of the M instruction sequences, the M2 is a positive integer, and an intersection between a set of the M1 instruction sequences and a set of the M2 instruction sequences is an empty set.

With reference to the second possible implementation manner of the fourth aspect or the third possible implementation manner of the fourth aspect, in a fourth possible implementation manner of the fourth aspect, the network packet processing program further includes X2 instruction sequences used to support implementation of the table lookup function for the X1 tables, where a mapping between the X2 instruction sequences and X2 tables is a one-to-one correspondence, the X2 tables are a subset of the X tables, the X2 is a positive integer, and an intersection between a set of the X1 instruction sequences and a set of the X2 instruction sequences is an empty set.

With reference to the second possible implementation manner of the fourth aspect or the third possible implementation manner of the fourth aspect or the fourth possible implementation manner of the fourth aspect, in a fifth possible implementation manner of the fourth aspect, the valid directed graph for data flow forwarding is obtained by pruning nodes and/or directed edges in an initial directed graph for data flow forwarding, where the initial directed graph for data flow forwarding includes X0 nodes and M0 directed edges, where a mapping between the M0 directed edges and M0 instruction sequences is a one-to-one correspondence, a mapping between the X0 nodes and X0 tables is a one-to-one correspondence, the set of the M directed edges is a subset in a set of the M0 directed edges, the set of the X nodes is a subset in a set of the X0 nodes, and the M0 and the X0 are positive integers.

With reference to the fifth possible implementation manner of the fourth aspect, in a sixth possible implementation manner of the fourth aspect, the processor is further configured to acquire an application scenario identifier, where the M0 instruction sequences are M0 instruction sequences identified by the application scenario identifier.

With reference to the second possible implementation manner of the fourth aspect or the third possible implementation manner of the fourth aspect or the fourth possible implementation manner of the fourth aspect, in a seventh possible implementation manner of the fourth aspect,
the processor is configured to create the network packet processing program based on the directed edges and the nodes in the valid directed graph for data flow forwarding.

With reference to the first possible implementation manner of the fourth aspect, in an eighth possible implementation manner of the fourth aspect, a next instruction of an exit instruction in an instruction sequence in the M1 instruction sequences is an entry instruction in an instruction sequence in the X1 instruction sequences, and/or a previous instruction of an entry instruction in an instruction sequence in the M1 instruction sequences is an exit instruction in an instruction sequence in the X1 instruction sequences.

With reference to the eighth possible implementation manner of the fourth aspect, in a ninth possible implementation manner of the fourth aspect, the network packet processing program further includes M2 instruction sequences used to support implementation of the function identified by the function identifier, where the M2 is a positive integer, and an intersection between a set of the M1 instruction sequences and a set of the M2 instruction sequences is an empty set, where a next instruction of an exit point in an instruction sequence in the M2 instruction sequences is an entry instruction in an instruction sequence in the X1 instruction sequences, and/or a previous instruction of an entry instruction in an instruction sequence in the M2 instruction sequences is an exit instruction in an instruction sequence in the X1 instruction sequences.

With reference to the ninth possible implementation manner of the fourth aspect, in a tenth possible implementation manner of the fourth aspect,
the network packet processing program further includes X2 instruction sequences used to support implementation of the table lookup function for the X1 tables, where the X2 is a positive integer, and an intersection between a set of the X1 instruction sequences and a set of the X2 instruction sequences is an empty set;
where a next instruction of an exit instruction in an instruction sequence in the M1 instruction sequences or the M2 instruction sequences is an entry instruction in an instruction sequence in the X2 instruction sequences, and/or a previous instruction of an entry instruction in an instruction sequence in the M1 instruction sequences or the M2 instruction sequences is an exit instruction in an instruction sequence in the X2 instruction sequences.

According to a fifth aspect, a communication system may include:
a packet forwarding processing device, configured to send a packet carrying a function identifier; and
a management device, configured to receive the packet carrying the function identifier; determine M1 instruction sequences used to implement a function identified by the function identifier; and create a network packet processing program, generate a program upgrade patch by using the created network packet processing program, and send the program upgrade patch to the packet forwarding processing device; or create a network packet processing program, and send the network packet processing program to the packet forwarding processing device, where each instruction sequence in the M1 instruction sequences includes a unique entry instruction, each instruction sequence in the M1 instruction sequences includes a unique exit instruction, M1 is a positive integer, and the network packet processing program includes the M1 instruction sequences.

As can be seen, in the embodiments of the present invention, after a function identifier is acquired, M1 instruction sequences used to implement a function identified by the function identifier are determined, where each instruction sequence in the M1 instruction sequences includes a unique entry instruction, and each instruction sequence in the M1 instruction sequences includes a unique exit instruction. Because program code is divided according to a granularity of instruction sequences, a mechanism for customizing a network packet processing program is provided, and further, an instruction sequence meeting a requirement may be obtained by screening based on the acquired function identifier, which is further advantageous for creating a network packet processing program that more closely matches an actual requirement. This is advantageous for improving an extent of matching between an instruction executing device and a network packet processing program run by the instruction executing device, and reducing an amount of invalid code in the network packet processing program run by the instruction executing device.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for determining instruction sequences according to an embodiment of the present invention;
FIG. 2-a is a schematic diagram of a relationship between instruction sequences and function identifiers according to an embodiment of the present invention;

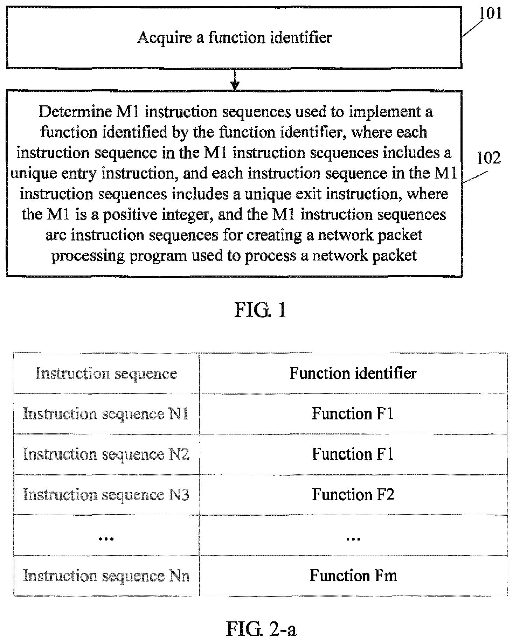

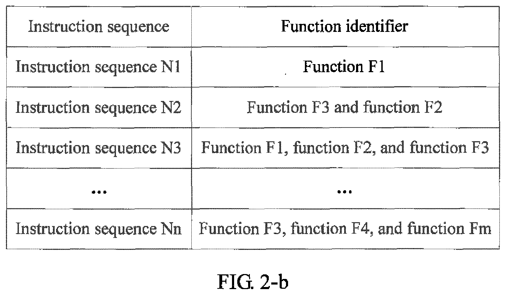

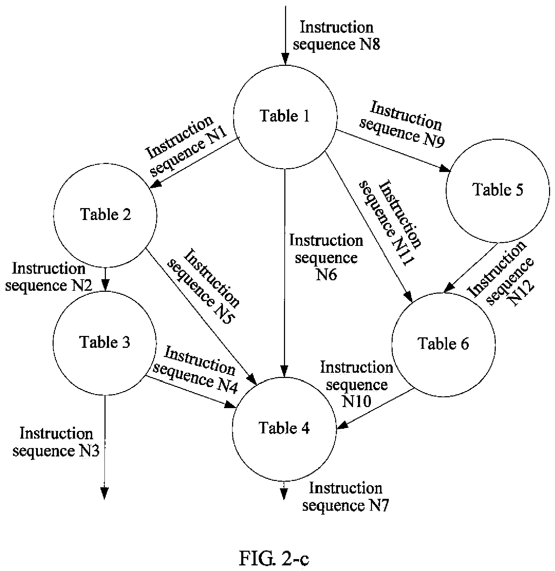

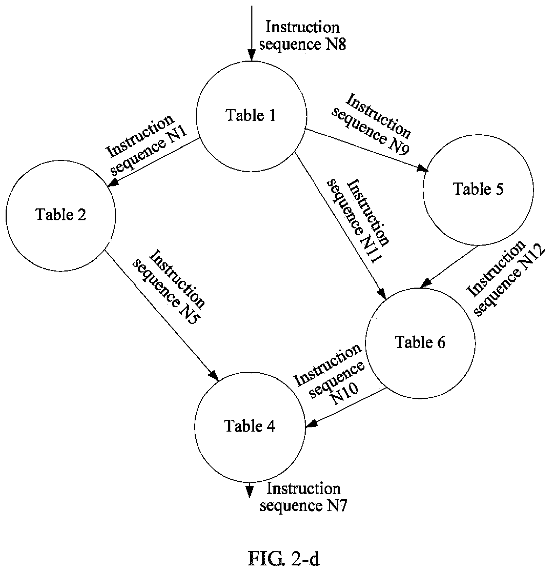

FIG. 2-b is a schematic diagram of another relationship between instruction sequences and function identifiers according to an embodiment of the present invention;
FIG. 2-c is a schematic diagram of an initial directed graph for data flow forwarding according to an embodiment of the present invention;
FIG. 2-d is a schematic diagram of a valid directed graph for data flow forwarding according to an embodiment of the present invention;

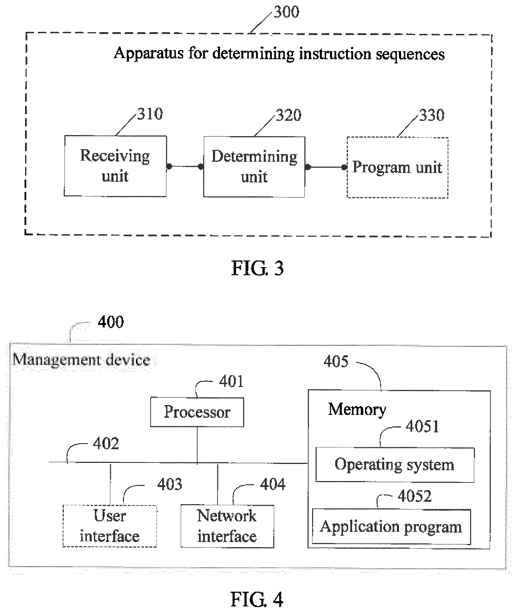

FIG. 3 is a schematic diagram of an apparatus for determining instruction sequences according to an embodiment of the present invention;
FIG. 4 is a schematic diagram of a management device according to an embodiment of the present invention;

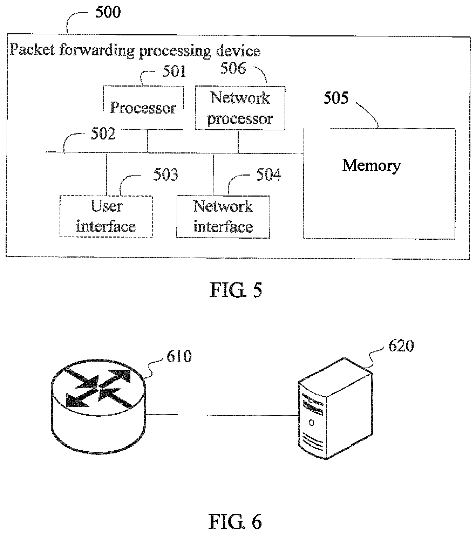

FIG. 5 is a schematic diagram of a forwarding processing device according to an embodiment of the present invention; and
FIG. 6 is a schematic diagram of a communication system according to an embodiment of the invention.

### DESCRIPTION OF EMBODIMENTS

Embodiments of the present invention provide a method for determining instruction sequences, a related device, and a system, to improve an extent of matching between a packet forwarding processing device and an instruction sequence that is executed by the packet forwarding processing device and used to process a network packet, and reduce an amount of invalid code run by the packet forwarding processing device. The following provides detailed descriptions by using specific embodiments.

To make the invention objectives, features, and advantages of the present invention clearer and more comprehensible, the following describes the technical solutions in the embodiments of the present invention with reference to the accompanying drawings in the embodiments of the present invention. Apparently, the embodiments described in the following are merely some but not all of the embodiments of the present invention.

In the specification, claims, and accompanying drawings of this application, the terms "first", "second", "third", "fourth", and the like are intended to distinguish between different objects but are not intended to describe a specific order. In addition, the terms "include" and "have" are not exclusive. For example, a process, a method, a system, a product, or a device including a series of steps or units is not limited to the listed steps or units, and may further include steps or units that are not listed.

An embodiment of the present invention provides a method for determining instruction sequences. The method for determining instruction sequences may include: acquiring a function identifier; and determining M1 instruction sequences used to implement a function identified by the function identifier, where each instruction sequence in the M1 instruction sequences includes a unique entry instruction (for example, a first instruction in each instruction sequence in the M1 instruction sequences is a unique entry instruction in the corresponding instruction sequence), and each instruction sequence in the M1 instruction sequences includes a unique exit instruction (for example, a last instruction in each instruction sequence in the M1 instruction sequences is an exit instruction in the corresponding instruction sequence), where M1 is a positive integer, and the M1 instruction sequences are instruction sequences for creating a network packet processing program used to process a network packet.

Referring to FIG. 1, FIG. 1 is a schematic flowchart of a method for determining instruction sequences according to an embodiment of the present invention. The method for determining instruction sequences according to the embodiment of the present invention may include the following content:
101. Acquire a function identifier.
102. Determine M1 instruction sequences used to implement a function identified by the function identifier.

Each instruction sequence in the M1 instruction sequences includes a unique entry instruction (for example, a first instruction in each instruction sequence in the M1 instruction sequences is a unique entry instruction in the corresponding instruction sequence), and each instruction sequence in the M1 instruction sequences includes a unique exit instruction (for example, a last instruction in each instruction sequence in the M1 instruction sequences is an exit instruction in the corresponding instruction sequence), where M1 is a positive integer, and the M1 instruction sequences are instruction sequences for creating a network packet processing program used to process a network packet.

A device that executes step 101 and step 102 may be a management device (such as a network management server or a software-defined networking (software-defined networking, SDN for short) controller). Alternatively, the device that executes step 101 and step 102 may be a packet forwarding processing device (for example, a router or a network switch).

The acquired function identifier may identify a function of performing forwarding processing for one or more network protocols. For example, the function identified by the acquired function identifier may include at least one of the following functions: collecting statistics of bytes of a network packet, adding a virtual local area network (virtual local area network, VLAN for short) tag to the network packet, removing the VLAN tag from the network packet, and changing a value of a differentiated services code point (differentiated services code point, DSCP for short) field in an Internet Protocol (Internet Protocol, IP for short) packet header of the network packet. Certainly, the function identified by the function identifier may also include one or more other functions.

The function identifier may be acquired in various manners. For example, a packet that is sent by another device and carries the function identifier may be received through a network interface, or the function identifier may be acquired through a user interface (for example, a man-machine interface). The function identifier may also be acquired in other manners. For example, if the device that executes step 101 is a network management server or an SDN controller, the network management server or the SDN controller may acquire the function identifier through a user interface of the network management server or the SDN controller, or the network management server or the SDN controller may receive, through a network interface, a packet that carries the function identifier (for example, coming from a packet forwarding processing device or another third-party device). For another example, if the device that executes step 101 is a packet forwarding processing device (the packet forwarding processing device may be, for example, a router or a network switch), the packet forwarding processing device may acquire the function identifier through a user interface of the packet forwarding processing device, or the packet forwarding processing device may receive, through a network interface, a packet that carries the function identifier and comes from a network management server, an SDN controller, or another third-party device.

In the technical solution provided by this embodiment, after a function identifier is acquired, M1 instruction sequences used to implement a function identified by the function identifier are determined, where each instruction sequence in the M1 instruction sequences includes a unique entry instruction, and each instruction sequence in the M1 instruction sequences includes a unique exit instruction. Because program code is divided according to a granularity of instruction sequences, a mechanism for customizing a network packet processing program is provided, and further, an instruction sequence meeting a requirement may be obtained by screening based on the acquired function identifier (namely, based on a requirement), which is further advantageous for creating a network packet processing program that more closely matches an actual requirement. This is advantageous for improving an extent of matching between an instruction executing device and a network packet processing program run by the instruction executing device, and reducing an amount of invalid code in the network packet processing program run by the instruction executing device (for example, a packet forwarding processing device).

Optionally, in some possible implementation manners, an application scenario identifier may be further acquired when the function identifier is acquired, where the application scenario identifier may identify a set of M0 instruction sequences. That is, a universal set of instruction sequences may be determined based on the application scenario identifier. Different application scenario identifiers may identify different universal sets of instruction sequences. An intersection between two universal sets of instruction sequences identified by two application scenario identifiers may be an empty set or a non-empty set. For example, the determining M1 instruction sequences used to implement a function identified by the function identifier may include: determining, in the set of the M0 instruction sequences that is identified by the application scenario identifier, M1 instruction sequences that match the function identifier by using the function identifier as an index. The set of the M0 instruction sequences is a universal set of instruction sequences used to implement various functions, or the set of the M0 instruction sequences is a universal set of instruction sequences used to implement various functions corresponding to an application scenario.

Optionally, in some possible implementation manners, each instruction sequence in the M0 instruction sequences may be labeled with at least one function identifier in advance. At least one function identifier labeled in an instruction sequence indicates that the instruction sequence may be used to implement a function identified by the at least one function identifier. For example, FIG. 2-a and FIG. 2-b show two possible manners of labeling function identifiers. Some instruction sequences in the M0 instruction sequences may be labeled to implement multiple functions, as shown in FIG. 2-b. For example, instruction sequences used to implement a function a1 include an instruction sequence a11, an instruction sequence a 12, and an instruction sequence a13, and instruction sequences used to implement a function b1 include an instruction sequence a11, an instruction sequence b11, an instruction sequence b12, and an instruction sequence b13. Obviously, a set of the instruction sequence a11 is an intersection between a set of the instruction sequences used to implement the function a1 and a set of the instruction sequences used to implement the function b1. Optionally, in some possible implementation manners, the method for determining instruction sequences may further include: creating, by a management device (such as a network management server or a software-defined networking controller), the network packet processing program, generating a program upgrade patch by using the created network packet processing program, and sending the program upgrade patch to a packet forwarding processing device (correspondingly, the packet forwarding processing device may use the program upgrade patch to upgrade a local network packet processing program, and use the upgraded network packet processing program to process a received network packet); or creating, by a management device (such as a network management server or a software-defined networking controller), the network packet processing program, and sending the network packet processing program to a packet forwarding processing device (correspondingly, the packet forwarding processing device installs the received network packet processing program on the packet forwarding processing device, and uses the installed network packet processing program to process a received network packet); or creating, by a packet forwarding processing device, the network packet processing program, and installing the network packet processing program on the packet forwarding processing device (correspondingly, the packet forwarding processing device may run the installed network packet processing program to process a received network packet), where the network packet processing program includes the M1 instruction sequences. Optionally, in some possible implementation manners, X1 items may also be acquired when the function identifier is acquired (for example, a packet carrying the acquired function identifier further carries X1 items), where a mapping between the X1 items and X1 tables is a one-to-one correspondence, and the X1 is a positive integer.

Based on different lookup algorithms, tables may be, for example, routing tables, incoming label map (incoming label map) tables, forwarding information base (forward information base) tables, media access control (media access control) tables, mask match (access control list, ACL for short) tables, longest prefix match (longest prefix match, LPM for short) tables, exact match (exact match, EM for short) tables, and direct access (direct) tables, flow tables (flow table). For flow tables, refer to the *OpenFlow Switch Specification version 1*.*4*.*0* (OpenFlow Switch Specification version 1.4.0).

The method for determining instruction sequences may further include: determining X1 instruction sequences used to implement a table lookup function for the X1 tables, where a mapping between the X1 instruction sequences and the X1 tables is a one-to-one correspondence, and the network packet processing program further includes the X1 instruction sequences. In addition, if hardware is used in the packet forwarding processing device to implement the table lookup function for a table in the X1 tables, the network packet processing program may not include an instruction sequence used to implement the table lookup function for the table.

Optionally, a first item in the X1 items may include at least one type of the following information: an identifier of a first table, the first table, and one instruction sequence used to implement the table lookup function for the first table, where the first item is any one item in the X1 items, and the first table is any one table in the X1 tables. During some specific implementation processes, the first table and/or the one instruction sequence used to implement the table lookup function for the first table may be indexed according to the identifier of the first table. Alternatively, the one instruction sequence used to implement the table lookup function for the first table may be indexed according to the first table itself (the first table may include or not include the identifier of the first table).

The instruction sequence used to implement the table lookup function for a table may include at least one exit instruction and at least one entry instruction, that is, the instruction sequence used to implement the table lookup function for a table may have at least one point and at least one exit point.

Optionally, in other possible implementation manners, a next instruction of an exit instruction in an instruction sequence in the M1 instruction sequences is an entry instruction in an instruction sequence in the X1 instruction sequences, and/or a previous instruction of an entry instruction in an instruction sequence in the M1 instruction sequences is an exit instruction in an instruction sequence in the X1 instruction sequences.

Optionally, the network packet processing program may further include M2 instruction sequences used to support implementation of the function identified by the function identifier. A next instruction of an exit instruction in an instruction sequence in the M2 instruction sequences is an entry instruction in an instruction sequence in the X1 instruction sequences, and/or a previous instruction of an entry instruction in an instruction sequence in the M2 instruction sequences is an exit instruction in an instruction sequence in the X1 instruction sequences.

For example, some bottom-layer functions may be required to support some upper-layer functions, where one bottom-layer function may be used to support one or more upper-layer functions, and multiple bottom-layer functions may also be required to support one upper-layer function. Therefore, when the function identifier is acquired, it may be not only necessary to determine the M1 instruction sequences used to implement the function identified by the acquired function identifier, but also necessary to determine the M2 instruction sequences used to support implementation of the function identified by the function identifier.

Still optionally, in other possible implementation manners, the network packet processing program may further include X2 instruction sequences used to support implementation of the table lookup function for the X1 tables, where the X2 is a positive integer. A next instruction of an exit instruction in an instruction sequence in the M1 instruction sequences or the M2 instruction sequences is an entry instruction in an instruction sequence in the X2 instruction sequences, and/or a previous instruction of an entry instruction in an instruction sequence in the M1 instruction sequences or the M2 instruction sequences is an exit instruction in an instruction sequence in the X2 instruction sequences.

Further, for ease of intuitive understanding, a correspondence between tables and instruction sequences used to implement a function identified by a function identifier may be reflected by a directed graph for data flow forwarding. Certainly, because the tables are corresponding to instruction sequences used to implement a table lookup function for the tables, the directed graph for data flow forwarding may also show, to some extent, the correspondence between the instruction sequences used to implement the function identified by the function identifier and the instruction sequences used to implement the table lookup function for the tables. Different nodes in the directed graph for data flow forwarding are corresponding to different tables, and different edges in the directed graph for data flow forwarding are corresponding to different instruction sequences used to implement functions.

An initial directed graph for data flow forwarding may include edges corresponding to instruction sequences used to implement all functions, and further include instruction sequences corresponding to all tables related to all the functions. A valid directed graph for data flow forwarding may be obtained by pruning the initial directed graph for data flow forwarding.

Optionally, in some possible implementation manners, the M1 instruction sequences are bijective to M1 directed edges in a valid directed graph for data flow forwarding, and the X1 tables are bijective to X1 nodes in the valid directed graph for data flow forwarding. The valid directed graph for data flow forwarding includes X nodes and M directed edges, where the M directed edges are bijective to M instruction sequences, and the X nodes are bijective to X tables. A set of the M1 directed edges is a subset in a set of the M directed edges, a set of the X1 nodes is a subset in a set of the X nodes, and the M and the X are positive integers. Specifically, for example, the X tables include the X1 tables and the X2 tables, and the M instruction sequences include the M1 instruction sequences and the M2 instruction sequences.

Optionally, in some possible implementation manners, a next instruction of an exit instruction in an instruction sequence corresponding to an incoming edge of a node in the X nodes is an entry instruction in an instruction sequence used to implement the table lookup function for a table corresponding to the node. A previous instruction of an entry instruction in an instruction sequence corresponding to an outgoing edge of a node in the X nodes may be an exit instruction in an instruction sequence used to implement the table lookup function for a table corresponding to each node. That is, a next instruction of an exit instruction in an instruction sequence corresponding to an incoming edge of a node i1 is an entry instruction in an instruction sequence used to implement the table lookup function for a table corresponding to the node i1, where the node i1 is any one node in the X nodes; and a previous instruction of an entry instruction in an instruction sequence corresponding to an outgoing edge of a node j 1 may be an exit instruction in an instruction sequence used to implement the table lookup function for a table corresponding to the node j1, where the node j1 is any one node in the X nodes.

Optionally, in some possible implementation manners, if hardware is used in the packet forwarding processing device to implement the table lookup function, after executing an exit instruction in an instruction sequence corresponding to an incoming edge of a node i2, the packet forwarding processing device may use corresponding hardware to execute the table lookup function for a table corresponding to the node i2, where the node i2 is any one node in the X nodes; and after using corresponding hardware to execute the table lookup function for a table corresponding to a node j2, the packet forwarding processing device executes an entry instruction in an instruction sequence corresponding to an outgoing edge of a node j2, where the node j2 is any one node in the X nodes.

Optionally, in some possible implementation manners, the network packet processing program may further include M2 instruction sequences used to support implementation of the function identified by the function identifier, where a set of the M2 instruction sequences is a subset of the M instruction sequences, and an intersection between a set of the M1 instruction sequences and the set of the M2 instruction sequences is an empty set.

Optionally, in some possible implementation manners, the network packet processing program further includes X2 instruction sequences used to support implementation of the table lookup function for the X1 tables, where the X2 instruction sequences correspond one-to-one to X2 tables, a set of the X2 tables is a subset in a set of the X tables, the X2 is a positive integer, and an intersection between a set of the X1 instruction sequences and a set of the X2 instruction sequences is an empty set. Optionally, in some possible implementation manners, the valid directed graph for data flow forwarding is obtained by pruning nodes and directed edges in an initial directed graph for data flow forwarding, or the valid directed graph for data flow forwarding is obtained by pruning directed edges in an initial directed graph for data flow forwarding. The initial directed graph for data flow forwarding includes X0 nodes and M0 directed edges, where the M0 directed edges correspond one-to-one to M0 instruction sequences, the X0 nodes correspond one-to-one to X0 tables, the set of the M directed edges is a subset in a set of the M0 directed edges, the X nodes are a subset of the X0 nodes, and the M0 and the X0 are positive integers.

The valid directed graph for data flow forwarding may be obtained by pruning invalid nodes and/or invalid directed edges in the initial directed graph for data flow forwarding, where valid directed edges may be considered as directed edges corresponding to the M instruction sequences, and directed edges except the valid directed edges in the initial directed graph for data flow forwarding may be considered as invalid directed edges. The M instruction sequences include the M1 instruction sequences and the M2 instruction sequences, and certainly M2 may be equal to 0. Valid nodes may be considered as nodes corresponding to the X tables, and nodes except the valid nodes in the initial directed graph for data flow forwarding may be considered as invalid nodes. The X tables include the X1 tables and the X2 tables, and certainly X2 may be equal to 0. Referring to FIG. 2-c and FIG. 2-d, for example, FIG. 2-c shows an initial directed graph for data flow forwarding. Assuming that invalid nodes include a node corresponding to Table 3, and invalid edges include directed edges corresponding to an instruction sequence N6, an instruction sequence N2, an instruction sequence N3, and an instruction sequence N4, a valid directed graph for data flow forwarding is obtained by pruning the initial directed graph for data flow forwarding, as shown in FIG. 2-d.

Optionally, in some possible implementation manners, the creating the network packet processing program includes: creating the network packet processing program based on the directed edges and the nodes in the valid directed graph for data flow forwarding. Because the directed edges and the nodes in the valid directed graph for data flow forwarding may reflect a correspondence between the instruction sequences used to implement the table lookup function for the tables and the instruction sequences used to implement the function identified by the function identifier, based on the directed edges and the nodes in the valid directed graph for data flow forwarding, the network packet processing program can be created quickly and conveniently.

In common implementation manners not using the solution of this embodiment of the present invention, according to a location in which a packet forwarding processing device is deployed, generally only a minority of all functions supported by the packet forwarding processing device are used, and generally processing logic of the minority of functions may be implemented by using a small amount of code. That is, a network packet processing program run on a common packet forwarding processing device includes a large amount of invalid code, and the invalid code may cause the following impacts on the packet forwarding processing device: limited processing resources on the packet forwarding processing device are mostly occupied, and therefore a packet forwarding processing time may be increased, and packet forwarding processing performance is reduced; a size and power consumption of a hardware chip in the packet forwarding processing device may be increased; and more code tends to introduce more program vulnerabilities. In addition, in recent years, a development direction of a network (for example, software-defined networking and network function virtualization) and constantly developed new network protocols all gradually require that the packet forwarding processing device itself should be capable of implementing more flexible function configuration. In a common implementation manner, a manner of forming the network packet processing program in the packet forwarding processing device cannot satisfy so flexible application requirements. However, in the technical solution provided by this embodiment of the present invention, after a function identifier is acquired, M1 instruction sequences used to implement a function identified by the function identifier are determined; and program code is divided according to a granularity of instruction sequences, and further, a network packet processing program may be obtained by combining instruction sequences. Therefore, a mechanism for customizing a network packet processing program is provided, so that a network packet processing program meeting a requirement may be generated according to a required function, which is further advantageous for creating a network packet processing program that more closely matches an actual requirement. This is advantageous for improving an extent of matching between a packet forwarding processing device and a network packet processing program run by the packet forwarding processing device, greatly reducing invalid code in the network packet processing program run by the packet forwarding processing device, reducing occupation of limited processing resources on the packet forwarding processing device, shortening a packet forwarding processing time, and improving packet forwarding processing performance, reducing a size and power consumption of a hardware chip in the packet forwarding processing device, and reducing a possibility of introducing more program vulnerabilities. In addition, this is advantageous for improving flexibility of function configuration for the packet forwarding processing device, and better satisfying a current requirement of network evolution.

The following further provides related apparatuses for implementing the foregoing solution.

Referring to FIG. 3, an embodiment of the present invention provides an apparatus 300 for determining instruction sequences. The apparatus may include an acquiring unit 310 and a determining unit 320.

The acquiring unit 310 is configured to receive an instruction carrying a function identifier.

The function identifier acquired by the acquiring unit 310 may identify a function of performing forwarding processing for one or more network protocols. For example, the function identified by the acquired function identifier may include at least one of the following functions: collecting statistics of bytes of a network packet, adding a VLAN tag to the network packet, removing the VLAN tag from the network packet, and changing a value of a DSCP field in an IP packet header of the network packet. Certainly, the function identified by the function identifier may also include one or more other functions.

The acquiring unit 310 may acquire the function identifier in various manners. For example, the acquiring unit 310 may receive, through a network interface, a packet that is sent by another device and carries the function identifier, or the acquiring unit 310 may acquire the function identifier through a user interface (for example, a man-machine interface). The acquiring unit 310 may also acquire the function identifier in other manners.

For example, assuming that the apparatus 300 for determining instruction sequences is a network management server or an SDN controller, the acquiring unit 310 may acquire the function identifier through a user interface of the network management server or the SDN controller, or the acquiring unit 310 may receive, through a network interface, a packet that carries the function identifier (for example, coming from a packet forwarding processing device or another third-party device). For another example, if the apparatus 300 for determining instruction sequences is a packet forwarding processing device (the packet forwarding processing device may be, for example, a router or a switch of the router), the acquiring unit 310 may acquire the function identifier through a user interface of the packet forwarding processing device, or the acquiring unit 310 may receive, through a network interface, for example, a packet that carries the function identifier and comes from a network management server or a software-defined networking controller or another third-party device.

For example, assuming that the apparatus 300 for determining instruction sequences is a network management server or an SDN controller, the acquiring unit 310 may acquire the function identifier through a user interface of the network management server or the SDN controller, or the acquiring unit 310 may receive, through a network interface, a packet that carries the function identifier (for example, coming from a packet forwarding processing device or another third-party device). For another example, if the apparatus 300 for determining instruction sequences is a packet forwarding processing device (the packet forwarding processing device may be, for example, a router or a switch of the router), the acquiring unit 310 may acquire the function identifier through a user interface of the packet forwarding processing device, or the acquiring unit 310 may receive, through a network interface, for example, a packet that carries the function identifier and comes from a network management server or a software-defined networking controller or another third-party device.

The determining unit 320 is configured to determine M1 instruction sequences used to implement a function identified by the function identifier. Each instruction sequence in the M1 instruction sequences includes a unique entry instruction (for example, a first instruction in each instruction sequence in the M1 instruction sequences is a unique entry instruction in the corresponding instruction sequence), and each instruction sequence in the M1 instruction sequences includes a unique exit instruction (for example, a last instruction in each instruction sequence in the M1 instruction sequences is an exit instruction in the corresponding instruction sequence), where M1 is a positive integer, and the M1 instruction sequences are instruction sequences for processing a network packet.

Optionally, in some possible implementation manners, the acquiring unit 310 may be further configured to acquire an application scenario identifier, where the application scenario identifier may identify a set of M0 instruction sequences. That is, a universal set of instruction sequences may be determined based on the application scenario identifier. Different application scenario identifiers may identify different universal sets of instruction sequences. An intersection between two universal sets of instruction sequences identified by two application scenario identifiers may be an empty set or a non-empty set. For example, the determining unit 320 may be specifically configured to: determine, in the set of the M0 instruction sequences that is identified by the application scenario identifier, M1 instruction sequences that match the function identifier by using the function identifier as an index. The set of the M0 instruction sequences is a universal set of instruction sequences used to implement various functions, or the set of the M0 instruction sequences is a universal set of instruction sequences used to implement various functions corresponding to an application scenario.

Optionally, in some possible implementation manners, each instruction sequence in the M0 instruction sequences may be labeled with at least one function identifier in advance. At least one function identifier labeled in an instruction sequence indicates that the instruction sequence may be used to implement a function identified by the at least one function identifier. For example, FIG. 2-a and FIG. 2-b show two possible manners of labeling function identifiers. Some instruction sequences in the M0 instruction sequences may be labeled to implement multiple functions, as shown in FIG. 2-b. For example, instruction sequences used to implement a function a1 include an instruction sequence a11, an instruction sequence a12, and an instruction sequence a13, and instruction sequences used to implement a function b1 include an instruction sequence a11, an instruction sequence b11, an instruction sequence b12, and an instruction sequence b13. Obviously, a set of the instruction sequence a11 is an intersection between a set of the instruction sequences used to implement the function a1 and a set of the instruction sequences used to implement the function b1.

Optionally, in some possible implementation manners,
the apparatus 300 for determining instruction sequences further includes: a program unit 330, configured to create the network packet processing program, generate a program upgrade patch by using the created network packet processing program, and send the program upgrade patch to a packet forwarding processing device (correspondingly, the packet forwarding processing device may use the program upgrade patch to upgrade a local network packet processing program, and use the upgraded network packet processing program to process a received network packet); or a program unit 330, configured to create the network packet processing program, and send the network packet processing program to a packet forwarding processing device (correspondingly, the packet forwarding processing device may install the received network packet processing program locally, and use the installed network packet processing program to process a received network packet); or a program unit 330, configured to create the network packet processing program, and install the network packet processing program (correspondingly, the packet forwarding processing device may run the installed network packet processing program to process a received network packet), where the network packet processing program includes the M1 instruction sequences.

Optionally, in some possible implementation manners, the acquiring unit 310 is further configured to acquire X1 items, where a mapping between the X1 items and X1 tables is a one-to-one correspondence.

The determining unit 320 is further configured to determine X1 instruction sequences used to implement a table lookup function for the X1 tables, where a mapping between the X1 instruction sequences and the X1 tables is a one-to-one correspondence, the network packet processing program further includes the X1 instruction sequences, and the X1 is a positive integer.

In addition, if hardware is used in the packet forwarding processing device to implement the table lookup function for a table, the network packet processing program may not include an instruction sequence used to implement the table lookup function for the table.

Optionally, in some possible implementation manners, a next instruction of an exit instruction in an instruction sequence in the M1 instruction sequences is an entry instruction in an instruction sequence in the X1 instruction sequences, and/or a previous instruction of an entry instruction in an instruction sequence in the M1 instruction sequences is an exit instruction in an instruction sequence in the X1 instruction sequences.

Optionally, in some possible implementation manners, the network packet processing program further includes M2 instruction sequences used to support implementation of the function identified by the function identifier, where the M2 is a positive integer, and an intersection between a set of the M1 instruction sequences and a set of the M2 instruction sequences is an empty set, where a next instruction of an exit point in an instruction sequence in the M2 instruction sequences is an entry instruction in an instruction sequence in the X1 instruction sequences, and/or a previous instruction of an entry instruction in an instruction sequence in the M2 instruction sequences is an exit instruction in an instruction sequence in the X1 instruction sequences.

Optionally, in some possible implementation manners, the network packet processing program further includes X2 instruction sequences used to support implementation of the table lookup function for the X1 tables, where the X2 is a positive integer, and an intersection between a set of the X1 instruction sequences and a set of the X2 instruction sequences is an empty set.

A next instruction of an exit instruction in an instruction sequence in the M1 instruction sequences or the M2 instruction sequences is an entry instruction in an instruction sequence in the X2 instruction sequences, and/or a previous instruction of an entry instruction in an instruction sequence in the M1 instruction sequences or the M2 instruction sequences is an exit instruction in an instruction sequence in the X2 instruction sequences.

Further, for ease of intuitive understanding, a correspondence between tables and instruction sequences used to implement a function identified by a function identifier may be reflected by a directed graph for data flow forwarding. Certainly, because the tables are corresponding to the instruction sequences used to implement the table lookup function for the tables, the directed graph for data flow forwarding may also show, to some extent, the correspondence between the instruction sequences used to implement the function identified by the function identifier and the instruction sequences used to implement the table lookup function for the tables. Different nodes in the directed graph for data flow forwarding are corresponding to different tables, and different edges in the directed graph for data flow forwarding are corresponding to different instruction sequences used to implement functions.

An initial directed graph for data flow forwarding may include edges corresponding to instruction sequences used to implement all functions, and further include instruction sequences corresponding to all tables related to all the functions. A valid directed graph for data flow forwarding may be obtained by pruning the initial directed graph for data flow forwarding.

Optionally, in some possible implementation manners, the M1 instruction sequences are bijective to M1 directed edges in a valid directed graph for data flow forwarding, and the X1 tables are bijective to X1 nodes in the valid directed graph for data flow forwarding.

The valid directed graph for data flow forwarding includes X nodes and M directed edges, where the M directed edges are bijective to M instruction sequences, the X nodes are bijective to X tables, the M1 directed edges are a subset in a set of the M directed edges, the X1 nodes are a subset in a set of the X nodes, and the M and the X are positive integers.

A next instruction of an exit instruction in an instruction sequence corresponding to an incoming edge of a node i1 in the X nodes is an entry instruction in an instruction sequence used to implement the table lookup function for a table corresponding to the node i1, and a previous instruction of an entry instruction in an instruction sequence corresponding to an outgoing edge of a node j 1 in the X nodes is an exit instruction in an instruction sequence used to implement the table lookup function for a table corresponding to the node j1, where the node i1 is any one node in the X nodes, and the node j 1 is any one node in the X nodes.

Optionally, in some possible implementation manners, the network packet processing program further includes M2 instruction sequences used to support implementation of the function identified by the function identifier, where the M2 instruction sequences are a subset of the M instruction sequences, the M2 is a positive integer, and an intersection between a set of the M1 instruction sequences and a set of the M2 instruction sequences is an empty set.

Optionally, in some possible implementation manners, the network packet processing program further includes X2 instruction sequences used to support implementation of the table lookup function for the X1 tables, where a mapping between the X2 instruction sequences and X2 tables is a one-to-one correspondence, the X2 tables are a subset of the X tables, the X2 is a positive integer, and an intersection between a set of the X1 instruction sequences and a set of the X2 instruction sequences is an empty set.

It is understandable that, functions of each functional module of the apparatus 300 for determining instruction sequences in this embodiment may be specifically implemented according to the method in the foregoing method embodiment. For a specific implementation process thereof, refer to the related description in the foregoing method embodiment, and details are not described herein again.

It is understandable that, the apparatus 300 for determining instruction sequences in this embodiment may be a network management server, a packet forwarding processing device, an SDN controller, or a third-party device different from a network management server, a packet forwarding processing device, and an SDN controller. As can be seen from above, an apparatus 300 for determining instruction sequences in this embodiment determines, after acquiring a function identifier, M1 instruction sequences used to implement a function identified by the function identifier, where each instruction sequence in the M1 instruction sequences includes a unique entry instruction, and each instruction sequence in the M1 instruction sequences includes a unique exit instruction. Because program code is divided according to a granularity of instruction sequences, a mechanism for customizing a network packet processing program is provided, and further, an instruction sequence meeting a requirement may be obtained by screening based on the acquired function identifier (namely, based on a requirement), which is further advantageous for creating a network packet processing program that more closely matches an actual requirement. This is advantageous for improving an extent of matching between an instruction executing device and a network packet processing program run by the instruction executing device, and reducing an amount of invalid code in the network packet processing program run by the instruction executing device (for example, a packet forwarding processing device). Referring to FIG. 4, FIG. 4 is a structural block diagram of a management device 400 according to another embodiment of the present invention. The management device 400 may include at least one processor 401, at least one network interface 404, a memory 405, and at lease one communications bus 402. The communications bus 402 is configured to implement connection and communication between the components. The management device 400 optionally includes a user interface 503, including an output device (for example, a touchscreen, a liquid crystal display, a holographic (holographic) device, or a projector (projector)), and an input device (for example, a keyboard, a mouse, a trackball (trackball), a touchpad or a touchscreen, a camera, or a pickup apparatus). The memory 405 may include a read-only memory and a random access memory, and provide an instruction and data for the processor 501. A part of the memory 405 may further include a non-volatile random access memory.

The processor 401 may be a central processing unit (central processing unit, CPU for short), or may be a combination of a CPU and a hardware chip. The hardware chip may be one or a combination of the following: an application-specific integrated circuit (application-specific integrated circuit, ASIC for short), a field-programmable gate array (field-programmable gate array, FPGA for short), and a complex programmable logic device (complex programmable logic device, CPLD for short). The memory 405 is configured to store program code, and transmit the program code to the processor 501. The memory may include a volatile memory (volatile memory), for example, a random access memory (random-access memory, RAM for short); the memory may also include a non-volatile memory (non-volatile memory), for example, a read-only memory (read-only memory, ROM for short), a flash memory (flash memory), a hard disk drive (hard disk drive, HDD for short), or a solid-state drive (solid-state drive, SSD for short); the memory may further include a combination of the foregoing types of memories.

The network interface 404 may be implemented by an optical transceiver, an electrical transceiver, a wireless transceiver, or any combination thereof. For example, the optical transceiver may be a small form-factor pluggable (small form-factor pluggable transceiver, SFP for short) transceiver (transceiver), an enhanced small form-factor pluggable (enhanced small form-factor pluggable, SFP+ for short) transceiver, or a 10 Gigabit small form-factor pluggable (10 Gigabit small form-factor pluggable, XFP for short) transceiver. The electrical transceiver may be an Ethernet (Ethernet) network interface controller (network interface controller, NIC for short). The wireless transceiver may be a wireless network interface controller (wireless network interface controller, WNIC for short).

In some implementation manners, the memory 405 stores the following elements: an executable module or a data structure, or a subset thereof, or an extended set thereof: an operating system 4051, which includes various system programs and is configured to implement various basic services and process hardware-based tasks. An application program module 4052 includes various application programs, and is configured to implement various application services.

In this embodiment of the present invention, the memory 405 is configured to store program code, and transmit the program code to the processor 401.

The processor 401 is configured to execute the following steps according to the program code: acquire a function identifier; determine M1 instruction sequences used to implement a function identified by the function identifier; and create a network packet processing program, generate a program upgrade patch by using the created network packet processing program, and send the program upgrade patch to a packet forwarding processing device through the network interface; or create a network packet processing program, and send the network packet processing program to a packet forwarding processing device through the network interface, where each instruction sequence in the M1 instruction sequences includes a unique entry instruction, each instruction sequence in the M1 instruction sequences includes a unique exit instruction, M1 is a positive integer, and the network packet processing program includes the M1 instruction sequences.

Optionally, the processor is further configured to acquire X1 items, where a mapping between the X1 items and X1 tables is a one-to-one correspondence; and determine X1 instruction sequences used to implement a table lookup function for the X1 tables, where a mapping between the X1 instruction sequences and the X1 tables is a one-to-one correspondence, the network packet processing program further includes the X1 instruction sequences, and the X1 is a positive integer.

Optionally, the M1 instruction sequences are bijective to M1 directed edges in a valid directed graph for data flow forwarding, and the X1 tables are bijective to X1 nodes in the valid directed graph for data flow forwarding.

The valid directed graph for data flow forwarding includes X nodes and M directed edges, where the M directed edges are bijective to M instruction sequences, the X nodes are bijective to X tables, the M1 directed edges are a subset in a set of the M directed edges, the X1 nodes are a subset in a set of the X nodes, and the M and the X are positive integers.

A next instruction of an exit instruction in an instruction sequence corresponding to an incoming edge of a node i1 in the X nodes is an entry instruction in an instruction sequence used to implement the table lookup function for a table corresponding to the node i1, and a previous instruction of an entry instruction in an instruction sequence corresponding to an outgoing edge of a node j 1 in the X nodes is an exit instruction in an instruction sequence used to implement the table lookup function for a table corresponding to the node j1, where the node i1 is any one node in the X nodes, and the node j 1 is any one node in the X nodes.

Optionally, the network packet processing program further includes M2 instruction sequences used to support implementation of the function identified by the function identifier, where the M2 instruction sequences are a subset of the M instruction sequences, the M2 is a positive integer, and an intersection between a set of the M1 instruction sequences and a set of the M2 instruction sequences is an empty set.

Optionally, the network packet processing program further includes X2 instruction sequences used to support implementation of the table lookup function for the X1 tables, where a mapping between the X2 instruction sequences and X2 tables is a one-to-one correspondence, the X2 tables are a subset of the X tables, the X2 is a positive integer, and an intersection between a set of the X1 instruction sequences and a set of the X2 instruction sequences is an empty set.

Optionally, the valid directed graph for data flow forwarding is obtained by pruning nodes and/or directed edges in an initial directed graph for data flow forwarding, where the initial directed graph for data flow forwarding includes X0 nodes and M0 directed edges, where a mapping between the M0 directed edges and M0 instruction sequences is a one-to-one correspondence, a mapping between the X0 nodes and X0 tables is a one-to-one correspondence, the set of the M directed edges is a subset in a set of the M0 directed edges, the set of the X nodes is a subset in a set of the X0 nodes, and the M0 and the X0 are positive integers.

Optionally, the processor 401 is further configured to acquire an application scenario identifier, where the M0 instruction sequences are M0 instruction sequences identified by the application scenario identifier.

Optionally, the processor 401 is configured to create the network packet processing program based on the directed edges and the nodes in the valid directed graph for data flow forwarding.

Optionally, a next instruction of an exit instruction in an instruction sequence in the M1 instruction sequences is an entry instruction in an instruction sequence in the X1 instruction sequences, and/or a previous instruction of an entry instruction in an instruction sequence in the M1 instruction sequences is an exit instruction in an instruction sequence in the X1 instruction sequences.

Optionally, the network packet processing program further includes M2 instruction sequences used to support implementation of the function identified by the function identifier, where the M2 is a positive integer, and an intersection between a set of the M1 instruction sequences and a set of the M2 instruction sequences is an empty set, where a next instruction of an exit point in an instruction sequence in the M2 instruction sequences is an entry instruction in an instruction sequence in the X1 instruction sequences, and/or a previous instruction of an entry instruction in an instruction sequence in the M2 instruction sequences is an exit instruction in an instruction sequence in the X1 instruction sequences.

Optionally, the network packet processing program further includes X2 instruction sequences used to support implementation of the table lookup function for the X1 tables, where the X2 is a positive integer, and an intersection between a set of the X1 instruction sequences and a set of the X2 instruction sequences is an empty set.

A next instruction of an exit instruction in an instruction sequence in the M1 instruction sequences or the M2 instruction sequences is an entry instruction in an instruction sequence in the X2 instruction sequences, and/or a previous instruction of an entry instruction in an instruction sequence in the M1 instruction sequences or the M2 instruction sequences is an exit instruction in an instruction sequence in the X2 instruction sequences.

It is understandable that, functions of each functional module of the management device 400 in this embodiment may be specifically implemented according to the method in the foregoing method embodiment. For a specific implementation process thereof, refer to the related description in the foregoing method embodiment, and details are not described herein again.

It is understandable that, the management device 400 in this embodiment may be a network management server, an SDN controller, or the like.

As can be seen from above, in the technical solution provided by this embodiment, a management device 400 determines, after acquiring a function identifier, M1 instruction sequences used to implement a function identified by the function identifier, where each instruction sequence in the M1 instruction sequences includes a unique entry instruction, and each instruction sequence in the M1 instruction sequences includes a unique exit instruction. Because program code is divided according to a granularity of instruction sequences, a mechanism for customizing a network packet processing program is provided, and further, an instruction sequence meeting a requirement may be obtained by screening based on the acquired function identifier (namely, based on a requirement), which is further advantageous for creating a network packet processing program that more closely matches an actual requirement. This is advantageous for improving an extent of matching between an instruction executing device and a network packet processing program run by the instruction executing device, and reducing an amount of invalid code in the network packet processing program run by the instruction executing device (for example, a packet forwarding processing device).

Referring to FIG. 5, FIG. 5 is a structural block diagram of a packet forwarding device 500 according to another embodiment of the present invention. The packet forwarding device 500 may include at least one processor 501, at least one network processor 506, at least one network interface 504, a memory 505, and at least one communications bus 502. The communications bus 502 is configured to implement connection and communication between the components.

The packet forwarding device 500 optionally includes a user interface 503, including an output device (for example, a touchscreen, a liquid crystal display, a holographic (holographic) device, or a projector (projector)), and an input device (for example, a keyboard, a mouse, a trackball (trackball), a touchpad or a touchscreen, a camera, or a pickup apparatus). The memory 505 may include a read-only memory and a random access memory, and provide an instruction and data for the processor 501. A part of the memory 502 may further include a non-volatile random access memory.

The processor 501 may be a central processing unit (central processing unit, CPU for short), or may be a combination of a CPU and a hardware chip. The hardware chip may be one or a combination of the following: an application-specific integrated circuit (application-specific integrated circuit, ASIC for short), a field-programmable gate array (field-programmable gate array, FPGA for short), and a complex programmable logic device (complex programmable logic device, CPLD for short). The memory 505 is configured to store program code, and transmit the program code to the processor 501. The memory may include a volatile memory (volatile memory), for example, a random access memory (random-access memory, RAM for short); the memory may also include a non-volatile memory (non-volatile memory), for example, a read-only memory (read-only memory, ROM for short), a flash memory (flash memory), a hard disk drive (hard disk drive, HDD for short), or a solid-state drive (solid-state drive, SSD for short); the memory may further include a combination of the foregoing types of memories.

The network interface 504 may be implemented by an optical transceiver, an electrical transceiver, a wireless transceiver, or any combination thereof. For example, the optical transceiver may be a small form-factor pluggable (small form-factor pluggable transceiver, SFP for short) transceiver (transceiver), an enhanced small form-factor pluggable (enhanced small form-factor pluggable, SFP+ for short) transceiver, or a 10 Gigabit small form-factor pluggable (10 Gigabit small form-factor pluggable, XFP for short) transceiver. The electrical transceiver may be an Ethernet (Ethernet) network interface controller (network interface controller, NIC for short). The wireless transceiver may be a wireless network interface controller (wireless network interface controller, WNIC for short).

In this embodiment of the present invention, the memory 505 is configured to store program code, and transmit the program code to the processor 501.

The processor 501 is configured to execute the following steps according to the program code:
acquire a function identifier, determine M1 instruction sequences used to implement a function identified by the function identifier, create a network packet processing program, and install the network packet processing program into the network processor 506, where each instruction sequence in the M1 instruction sequences includes a unique entry instruction, each instruction sequence in the M1 instruction sequences includes a unique exit instruction, M1 is a positive integer, and the network packet processing program includes the M1 instruction sequences; and
the network processor 506 is configured to install the network packet processing program, and process, according to the network packet processing program, a network packet received from the network interface.

Optionally, the processor is further configured to acquire X1 items, where a mapping between the X1 items and X1 tables is a one-to-one correspondence; and determine X1 instruction sequences used to implement a table lookup function for the X1 tables, where a mapping between the X1 instruction sequences and the X1 tables is a one-to-one correspondence, the network packet processing program further includes the X1 instruction sequences, and the X1 is a positive integer.

Optionally, the M1 instruction sequences are bijective to M1 directed edges in a valid directed graph for data flow forwarding, and the X1 tables are bijective to X1 nodes in the valid directed graph for data flow forwarding.

The valid directed graph for data flow forwarding includes X nodes and M directed edges, where the M directed edges are bijective to M instruction sequences, the X nodes are bijective to X tables, the M1 directed edges are a subset in a set of the M directed edges, the X1 nodes are a subset in a set of the X nodes, and the M and the X are positive integers.

A next instruction of an exit instruction in an instruction sequence corresponding to an incoming edge of a node i1 in the X nodes is an entry instruction in an instruction sequence used to implement the table lookup function for a table corresponding to the node i1, and a previous instruction of an entry instruction in an instruction sequence corresponding to an outgoing edge of a node j 1 in the X nodes is an exit instruction in an instruction sequence used to implement the table lookup function for a table corresponding to the node j 1, where the node i1 is any one node in the X nodes, and the node j 1 is any one node in the X nodes.

Optionally, the network packet processing program further includes M2 instruction sequences used to support implementation of the function identified by the function identifier, where the M2 instruction sequences are a subset of the M instruction sequences, the M2 is a positive integer, and an intersection between a set of the M1 instruction sequences and a set of the M2 instruction sequences is an empty set.

Optionally, the network packet processing program further includes X2 instruction sequences used to support implementation of the table lookup function for the X1 tables, where a mapping between the X2 instruction sequences and X2 tables is a one-to-one correspondence, the X2 tables are a subset of the X tables, the X2 is a positive integer, and an intersection between a set of the X1 instruction sequences and a set of the X2 instruction sequences is an empty set.

Optionally, the valid directed graph for data flow forwarding is obtained by pruning nodes and/or directed edges in an initial directed graph for data flow forwarding, where the initial directed graph for data flow forwarding includes X0 nodes and M0 directed edges, where a mapping between the M0 directed edges and M0 instruction sequences is a one-to-one correspondence, a mapping between the X0 nodes and X0 tables is a one-to-one correspondence, the set of the M directed edges is a subset in a set of the M0 directed edges, the set of the X nodes is a subset in a set of the X0 nodes, and the M0 and the X0 are positive integers.

Optionally, the processor is further configured to acquire an application scenario identifier, where the M0 instruction sequences are M0 instruction sequences identified by the application scenario identifier.

Optionally, the processor is configured to create the network packet processing program based on the directed edges and the nodes in the valid directed graph for data flow forwarding.

Optionally, a next instruction of an exit instruction in an instruction sequence in the M1 instruction sequences is an entry instruction in an instruction sequence in the X1 instruction sequences, and/or a previous instruction of an entry instruction in an instruction sequence in the M1 instruction sequences is an exit instruction in an instruction sequence in the X1 instruction sequences.

Optionally, the network packet processing program further includes M2 instruction sequences used to support implementation of the function identified by the function identifier, where the M2 is a positive integer, and an intersection between a set of the M1 instruction sequences and a set of the M2 instruction sequences is an empty set, where a next instruction of an exit point in an instruction sequence in the M2 instruction sequences is an entry instruction in an instruction sequence in the X1 instruction sequences, and/or a previous instruction of an entry instruction in an instruction sequence in the M2 instruction sequences is an exit instruction in an instruction sequence in the X1 instruction sequences.

Optionally, the network packet processing program further includes X2 instruction sequences used to support implementation of the table lookup function for the X1 tables, where the X2 is a positive integer, and an intersection between a set of the X1 instruction sequences and a set of the X2 instruction sequences is an empty set.

A next instruction of an exit instruction in an instruction sequence in the M1 instruction sequences or the M2 instruction sequences is an entry instruction in an instruction sequence in the X2 instruction sequences, and/or a previous instruction of an entry instruction in an instruction sequence in the M1 instruction sequences or the M2 instruction sequences is an exit instruction in an instruction sequence in the X2 instruction sequences.

It is understandable that, functions of each functional module of the packet forwarding processing device 500 in this embodiment may be specifically implemented according to the method in the foregoing method embodiment. For a specific implementation process thereof, refer to the related description in the foregoing method embodiment, and details are not described herein again.

It is understandable that, the packet forwarding processing device 500 in this embodiment may be a network switch, a router, or the like.

As can be seen from above, in the technical solution provided by this embodiment, a packet forwarding processing device 500 determines, after acquiring a function identifier, M1 instruction sequences used to implement a function identified by the function identifier, where each instruction sequence in the M1 instruction sequences includes a unique entry instruction, and each instruction sequence in the M1 instruction sequences includes a unique exit instruction. Because program code is divided according to a granularity of instruction sequences, a mechanism for customizing a network packet processing program is provided, and further, an instruction sequence meeting a requirement may be obtained by screening based on the acquired function identifier (namely, based on a requirement), which is further advantageous for creating a network packet processing program that more closely matches an actual requirement. This is advantageous for improving an extent of matching between an instruction executing device and a network packet processing program run by the instruction executing device, and reducing an amount of invalid code in the network packet processing program run by the instruction executing device (for example, a packet forwarding processing device).

Referring to FIG. 6, an embodiment of the present invention further provides a communication system, which may include:
a packet forwarding processing device 610, configured to send a packet carrying a function identifier; and
a management device 620, configured to receive the packet carrying the function identifier; determine M1 instruction sequences used to implement a function identified by the function identifier; and create a network packet processing program, generate a program upgrade patch by using the created network packet processing program, and send the program upgrade patch to the packet forwarding processing device 610; or create a network packet processing program, and send the network packet processing program to the packet forwarding processing device 610.

Each instruction sequence in the M1 instruction sequences includes a unique entry instruction (for example, a first instruction in each instruction sequence in the M1 instruction sequences is a unique entry instruction in the corresponding instruction sequence), and each instruction sequence in the M1 instruction sequences includes a unique exit instruction (for example, a last instruction in each instruction sequence in the M1 instruction sequences is an exit instruction in the corresponding instruction sequence), where M1 is a positive integer, and the M1 instruction sequences are instruction sequences for processing a network packet.

The acquired function identifier may identify a function of performing forwarding processing for one or more network protocols. For example, the function identified by the acquired function identifier may include at least one of the following functions: collecting statistics of bytes of a network packet, adding a VLAN tag to the network packet, removing the VLAN tag from the network packet, and changing a value of a DSCP field in an IP packet header of the network packet. Certainly, the function identified by the function identifier may also include one or more other functions.

For example, the packet forwarding processing device 610 has a network processor, and the network processor may run the network packet processing program to process the received network packet.

Optionally, in some possible implementation manners, the management device 620 may be further configured to acquire an application scenario identifier when acquiring the function identifier, where the application scenario identifier may identify a set of M0 instruction sequences. That is, a universal set of instruction sequences may be determined based on the application scenario identifier. Different application scenario identifiers may identify different universal sets of instruction sequences. An intersection between two universal sets of instruction sequences identified by two application scenario identifiers may be an empty set or a non-empty set. For example, the management device 620 may be configured to determine, in the set of the M0 instruction sequences that is identified by the application scenario identifier, M1 instruction sequences that match the function identifier by using the function identifier as an index. The set of the M0 instruction sequences is a universal set of instruction sequences used to implement various functions, or the set of the M0 instruction sequences is a universal set of instruction sequences used to implement various functions corresponding to an application scenario.

Optionally, in some possible implementation manners, each instruction sequence in the M0 instruction sequences may be labeled with at least one function identifier in advance. At least one function identifier labeled in an instruction sequence indicates that the instruction sequence may be used to implement a function identified by the at least one function identifier.

Optionally, in some possible implementation manners, the management device 620 may be further configured to acquire X1 items when acquiring the function identifier (for example, an instruction or a packet carrying the acquired function identifier further carries X1 items), where a mapping between the X1 items and X1 tables is a one-to-one correspondence, and the X1 is a positive integer.

The management device 620 may be further configured to determine X1 instruction sequences used to implement a table lookup function for the X1 tables, where a mapping between the X1 instruction sequences and the X1 tables is a one-to-one correspondence, and the network packet processing program further includes the X1 instruction sequences. In addition, if hardware is used in the packet forwarding processing device to implement the table lookup function for a table in the X1 tables, the network packet processing program may not include an instruction sequence used to implement the table lookup function for the table.

Optionally, a first item in the X1 items may include at least one type of the following information: an identifier of a first table, the first table, and one instruction sequence used to implement the table lookup function for the first table, where the first item is any one item in the X1 items, and the first table is any one table in the X1 tables. During some specific implementation processes, the first table and/or the one instruction sequence used to implement the table lookup function for the first table may be indexed according to the identifier of the first table. Alternatively, the one instruction sequence used to implement the table lookup function for the first table may be indexed according to the first table itself (the first table may include or not include the identifier of the first table).

The instruction sequence used to implement the table lookup function for a table may include at least one exit instruction and at least one entry instruction, that is, the instruction sequence used to implement the table lookup function for a table may have at least one point and at least one exit point.

Optionally, in other possible implementation manners, a next instruction of an exit instruction in an instruction sequence in the M1 instruction sequences is an entry instruction in an instruction sequence in the X1 instruction sequences, and/or a previous instruction of an entry instruction in an instruction sequence in the M1 instruction sequences is an exit instruction in an instruction sequence in the X1 instruction sequences.

Optionally, the network packet processing program may further include M2 instruction sequences used to support implementation of the function identified by the function identifier. A next instruction of an exit instruction in an instruction sequence in the M2 instruction sequences is an entry instruction in an instruction sequence in the X1 instruction sequences, and/or a previous instruction of an entry instruction in an instruction sequence in the M2 instruction sequences is an exit instruction in an instruction sequence in the X1 instruction sequences.

For example, some bottom-layer functions may be required to support some upper-layer functions, where one bottom-layer function may be used to support one or more upper-layer functions, and multiple bottom-layer functions may also be required to support one upper-layer function. Therefore, when the function identifier is acquired, it may be not only necessary to determine the M1 instruction sequences used to implement the function identified by the acquired function identifier, but also necessary to determine the M2 instruction sequences used to support implementation of the function identified by the function identifier.

Still optionally, in other possible implementation manners, the network packet processing program may further include X2 instruction sequences used to support implementation of the table lookup function for the X1 tables, where the X2 is a positive integer. A next instruction of an exit instruction in an instruction sequence in the M1 instruction sequences or the M2 instruction sequences is an entry instruction in an instruction sequence in the X2 instruction sequences, and/or a previous instruction of an entry instruction in an instruction sequence in the M1 instruction sequences or the M2 instruction sequences is an exit instruction in an instruction sequence in the X2 instruction sequences.

Further, for ease of intuitive understanding, a correspondence between tables and instruction sequences used to implement a function identified by a function identifier may be reflected by a directed graph for data flow forwarding. Certainly, because the tables are corresponding to the instruction sequences used to implement the table lookup function for the tables, the directed graph for data flow forwarding may also show, to some extent, the correspondence between the instruction sequences used to implement the function identified by the function identifier and the instruction sequences used to implement the table lookup function for the tables. Different nodes in the directed graph for data flow forwarding are corresponding to different tables, and different edges in the directed graph for data flow forwarding are corresponding to different instruction sequences used to implement functions.

An initial directed graph for data flow forwarding may include edges corresponding to instruction sequences used to implement all functions, and further include instruction sequences corresponding to all tables related to all the functions. A valid directed graph for data flow forwarding may be obtained by pruning the initial directed graph for data flow forwarding.

Optionally, in some possible implementation manners, the M1 instruction sequences are bijective to M1 directed edges in a valid directed graph for data flow forwarding, and the X1 tables are bijective to X1 nodes in the valid directed graph for data flow forwarding. The valid directed graph for data flow forwarding includes X nodes and M directed edges, where the M directed edges are bijective to M instruction sequences, and the X nodes are bijective to X tables. A set of the M1 directed edges is a subset in a set of the M directed edges, a set of the X1 nodes is a subset in a set of the X nodes, and the M and the X are positive integers. Specifically, for example, the X tables include the X1 tables and the X2 tables, and the M instruction sequences include the M1 instruction sequences and the M2 instruction sequences.

Optionally, in some possible implementation manners, a next instruction of an exit instruction in an instruction sequence corresponding to an incoming edge of a node in the X nodes is an entry instruction in an instruction sequence used to implement the table lookup function for a table corresponding to the node. A previous instruction of an entry instruction in an instruction sequence corresponding to an outgoing edge of a node in the X nodes may be an exit instruction in an instruction sequence used to implement the table lookup function for a table corresponding to each node. That is, a next instruction of an exit instruction in an instruction sequence corresponding to an incoming edge of a node i1 is an entry instruction in an instruction sequence used to implement the table lookup function for a table corresponding to the node i1, where the node i1 is any one node in the X nodes; and a previous instruction of an entry instruction in an instruction sequence corresponding to an outgoing edge of a node j 1 may be an exit instruction in an instruction sequence used to implement the table lookup function for a table corresponding to the node j1, where the node j1 is any one node in the X nodes.

Optionally, in some possible implementation manners, if hardware is used in the packet forwarding processing device to implement the table lookup function, after executing an exit instruction in an instruction sequence corresponding to an incoming edge of a node i2, the packet forwarding processing device may use corresponding hardware to execute the table lookup function for a table corresponding to the node i2, where the node i2 is any one node in the X nodes; and after using corresponding hardware to execute the table lookup function for a table corresponding to a node j2, the packet forwarding processing device executes an entry instruction in an instruction sequence corresponding to an outgoing edge of a node j2, where the node j2 is any one node in the X nodes.

Optionally, in some possible implementation manners, the network packet processing program may further include M2 instruction sequences used to support implementation of the function identified by the function identifier, where a set of the M2 instruction sequences is a subset of the M instruction sequences, and an intersection between a set of the M1 instruction sequences and the set of the M2 instruction sequences is an empty set.

Optionally, in some possible implementation manners, the network packet processing program further includes X2 instruction sequences used to support implementation of the table lookup function for the X1 tables, where the X2 instruction sequences correspond one-to-one to X2 tables, a set of the X2 tables is a subset in a set of the X tables, the X2 is a positive integer, and an intersection between a set of the X1 instruction sequences and a set of the X2 instruction sequences is an empty set. Optionally, in some possible implementation manners, the valid directed graph for data flow forwarding is obtained by pruning nodes and directed edges in an initial directed graph for data flow forwarding, or the valid directed graph for data flow forwarding is obtained by pruning directed edges in an initial directed graph for data flow forwarding. The initial directed graph for data flow forwarding includes X0 nodes and M0 directed edges, where the M0 directed edges correspond one-to-one to M0 instruction sequences, the X0 nodes correspond one-to-one to X0 tables, the set of the M directed edges is a subset in a set of the M0 directed edges, the X nodes are a subset of the X0 nodes, and the M0 and the X0 are positive integers.

The valid directed graph for data flow forwarding may be obtained by pruning invalid nodes and/or invalid directed edges in the initial directed graph for data flow forwarding, where valid directed edges may be considered as directed edges corresponding to the M instruction sequences, directed edges except the valid directed edges in the initial directed graph for data flow forwarding may be considered as invalid directed edges, and the M instruction sequences include the M1 instruction sequences and the M2 instruction sequences, and certainly M2 may be equal to 0. Valid nodes may be considered as nodes corresponding to the X tables. Nodes except the valid nodes in the initial directed graph for data flow forwarding may be considered as invalid nodes, the X tables include the X1 tables and the X2 tables, and certainly X2 may be equal to 0. Referring to FIG. 2-c and FIG. 2-d, for example, FIG. 2-c shows an initial directed graph for data flow forwarding. Assuming that invalid nodes include a node corresponding to Table 3, and invalid edges include directed edges corresponding to an instruction sequence N6, an instruction sequence N2, an instruction sequence N3, and an instruction sequence N4, a valid directed graph for data flow forwarding is obtained by pruning the initial directed graph for data flow forwarding, as shown in FIG. 2-d.

Optionally, in some possible implementation manners, the management device 620 is configured to create the network packet processing program based on the directed edges and the nodes in the valid directed graph for data flow forwarding. Because the directed edges and the nodes in the valid directed graph for data flow forwarding may reflect a correspondence between the instruction sequences used to implement the table lookup function for the tables and the instruction sequences used to implement the function identified by the function identifier, based on the directed edges and the nodes in the valid directed graph for data flow forwarding, the network packet processing program can be created quickly and conveniently.

In the technical solution provided by this embodiment, a management device 620 determines, after acquiring a function identifier from a packet forwarding processing device 610, M1 instruction sequences used to implement a function identified by the function identifer, where each instruction sequence in the M1 instruction sequences includes a unique entry instruction, and each instruction sequence in the M1 instruction sequences includes a unique exit instruction. Because program code is divided according to a granularity of instruction sequences, the management device 620 creates a network packet processing program, generates a program upgrade patch by using the created network packet processing program, and sends the program upgrade patch to the packet forwarding processing device 610; or the management device 620 creates a network packet processing program, and sends the network packet processing program to the packet forwarding processing device 610. Therefore, a mechanism for customizing a network packet processing program is provided, and further, an instruction sequence meeting a requirement may be obtained by screening based on the acquired function identifier (namely, based on a requirement), which is further advantageous for creating a network packet processing program that more closely matches an actual requirement. This is advantageous for improving an extent of matching between a packet forwarding processing device and a network packet processing program run by the packet forwarding processing device, and reducing an amount of invalid code in the network packet processing program run by the packet forwarding processing device.

In the foregoing embodiments, the description of each embodiment has respective focuses. For a part that is not described in detail in an embodiment, refer to related descriptions in other embodiments.

For ease of description, the foregoing method embodiments are described as a series of action combinations. However, a person skilled in the art should understand that the present invention is not limited to the described sequence of the actions, because some steps may be performed in another sequence or performed at the same time according to the present invention. All the embodiments described in this specification are exemplary embodiments, and the involved actions and modules are not necessarily mandatory to the present invention.

In the several embodiments provided in the present application, the disclosed apparatus may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed.

The units described as separate parts may or may not be physically separate, and parts displayed as units may or may not be physical units, may be located in one location, or may be distributed on a plurality of network units. Some or all of the units may be selected according to actual needs to achieve the objectives of the solutions of the embodiments.

In addition, each functional unit in the embodiments of the present invention may be a unit that physically exists separately, or two or more than two units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, all or some of the technical solutions of the present invention may be implemented in a form of a software product. The software product is stored in a storage medium, and includes several instructions for instructing a computer device (which may be specifically a processor in a computer device) to perform all or some of the steps of the methods described in the embodiments of the present invention. The storage medium is a non-transitory (non-transitory) medium, which may be a random access memory, a read-only memory, a flash memory, a hard disk drive, a solid-state drive, a magnetic tape (magnetic tape), a floppy disk (floppy disk), or an optical disc (optical disc), and a combination of thereof.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions recorded in the foregoing embodiments or make equivalent replacements to some technical features thereof, without departing from the scope of the technical solutions of the embodiments of the present invention.

## Claims

1. A method for determining instruction sequences, comprising:
acquiring a function identifier; and
determining M1 instruction sequences used to implement a function identified by the function identifier, wherein each instruction sequence in the M1 instruction sequences comprises a unique entry instruction, and each instruction sequence in the M1 instruction sequences comprises a unique exit instruction, wherein M1 is a positive integer, and the M1 instruction sequences are instruction sequences for creating a network packet processing program used to process a network packet.

2. The method according to claim 1, wherein:
the method further comprises:
creating the network packet processing program, generating a program upgrade patch by using the created network packet processing program, and sending the program upgrade patch to a packet forwarding processing device; or creating the network packet processing program, and sending the network packet processing program to a packet forwarding processing device; or creating the network packet processing program, and installing the network packet processing program;
wherein the network packet processing program comprises the M1 instruction sequences.

3. The method according to claim 2, wherein:
the method further comprises: acquiring X1 items, wherein a mapping between the X1 items and X1 tables is a one-to-one correspondence; and determining X1 instruction sequences used to implement a table lookup function for the X1 tables, wherein a mapping between the X1 instruction sequences and the X1 tables is a one-to-one correspondence, the network packet processing program further comprises the X1 instruction sequences, and the X1 is a positive integer.

4. The method according to claim 3, wherein:
a first item comprises at least one type of the following information: an identifier of a first table, the first table, and one instruction sequence used to implement the table lookup function for the first table, wherein the first item is any one item in the X1 items.

5. The method according to claim 3 or 4, wherein: the M1 instruction sequences are bijective to M1 directed edges in a valid directed graph for data flow forwarding, and the X1 tables are bijective to X1 nodes in the valid directed graph for data flow forwarding;
the valid directed graph for data flow forwarding comprises X nodes and M directed edges, wherein the M directed edges are bijective to M instruction sequences, the X nodes are bijective to X tables, the M1 directed edges are a subset in a set of the M directed edges, the X1 nodes are a subset in a set of the X nodes, and the M and the X are positive integers; and
a next instruction of an exit instruction in an instruction sequence corresponding to an incoming edge of a node i1 in the X nodes is an entry instruction in an instruction sequence used to implement the table lookup function for a table corresponding to the node i1, and a previous instruction of an entry instruction in an instruction sequence corresponding to an outgoing edge of a node j 1 in the X nodes is an exit instruction in an instruction sequence used to implement the table lookup function for a table corresponding to the node j1, wherein the node i1 is any one node in the X nodes, and the node j 1 is any one node in the X nodes.

6. The method according to claim 5, wherein the network packet processing program further comprises M2 instruction sequences used to support implementation of the function identified by the function identifier, wherein the M2 instruction sequences are a subset of the M instruction sequences, the M2 is a positive integer, and an intersection between a set of the M1 instruction sequences and a set of the M2 instruction sequences is an empty set.

7. The method according to claim 5 or 6, wherein:
the network packet processing program further comprises X2 instruction sequences used to support implementation of the table lookup function for the X1 tables, wherein a mapping between the X2 instruction sequences and X2 tables is a one-to-one correspondence, the X2 tables are a subset of the X tables, the X2 is a positive integer, and an intersection between a set of the X1 instruction sequences and a set of the X2 instruction sequences is an empty set.

8. The method according to any one of claims 5 to 7, wherein:
the valid directed graph for data flow forwarding is obtained by pruning nodes and/or directed edges in an initial directed graph for data flow forwarding, wherein the initial directed graph for data flow forwarding comprises X0 nodes and M0 directed edges, wherein a mapping between the M0 directed edges and M0 instruction sequences is a one-to-one correspondence, a mapping between the X0 nodes and X0 tables is a one-to-one correspondence, the set of the M directed edges is a subset in a set of the M0 directed edges, the set of the X nodes is a subset in a set of the X0 nodes, and the M0 and the X0 are positive integers.

9. The method according to claim 8, wherein:
the determining M1 instruction sequences used to implement a function identified by the function identifier comprises: determining, in the M0 instruction sequences, M1 instruction sequences that match the function identifier by using the function identifier as an index.

10. The method according to either one of claims 8 and 9, wherein:
the method further comprises: acquiring an application scenario identifier, wherein the M0 instruction sequences are M0 instruction sequences identified by the application scenario identifier.

11. The method according to any one of claims 5 to 10, wherein:
the creating the network packet processing program comprises: creating the network packet processing program based on the directed edges and the nodes in the valid directed graph for data flow forwarding.

12. The method according to claim 3 or 4, wherein a next instruction of an exit instruction in an instruction sequence in the M1 instruction sequences is an entry instruction in an instruction sequence in the X1 instruction sequences, and/or a previous instruction of an entry instruction in an instruction sequence in the M1 instruction sequences is an exit instruction in an instruction sequence in the X1 instruction sequences.

13. The method according to claim 12, wherein the network packet processing program further comprises M2 instruction sequences used to support implementation of the function identified by the function identifier, wherein the M2 is a positive integer, and an intersection between a set of the M1 instruction sequences and a set of the M2 instruction sequences is an empty set, wherein a next instruction of an exit point in an instruction sequence in the M2 instruction sequences is an entry instruction in an instruction sequence in the X1 instruction sequences, and/or a previous instruction of an entry instruction in an instruction sequence in the M2 instruction sequences is an exit instruction in an instruction sequence in the X1 instruction sequences.

14. The method according to claim 13, wherein:
the network packet processing program further comprises X2 instruction sequences used to support implementation of the table lookup function for the X1 tables, wherein the X2 is a positive integer, and an intersection between a set of the X1 instruction sequences and a set of the X2 instruction sequences is an empty set;
wherein a next instruction of an exit instruction in an instruction sequence in the M1 instruction sequences or the M2 instruction sequences is an entry instruction in an instruction sequence in the X2 instruction sequences, and/or a previous instruction of an entry instruction in an instruction sequence in the M1 instruction sequences or the M2 instruction sequences is an exit instruction in an instruction sequence in the X2 instruction sequences.

15. An apparatus for determining instruction sequences, comprising:
an acquiring unit, configured to acquire a function identifier; and
a determining unit, configured to determine M1 instruction sequences used to implement a function identified by the function identifier acquired by the acquiring unit, wherein each instruction sequence in the M1 instruction sequences comprises a unique entry instruction, and each instruction sequence in the M1 instruction sequences comprises a unique exit instruction, wherein M1 is a positive integer, and the M1 instruction sequences are instruction sequences for creating a network packet processing program used to process a network packet.

16. The apparatus for determining instruction sequences according to claim 15, wherein:
the apparatus for determining instruction sequences further comprises:
a program unit, configured to create the network packet processing program, generate a program upgrade patch by using the created network packet processing program, and send the program upgrade patch to a packet forwarding processing device; or create the network packet processing program, and send the network packet processing program to a packet forwarding processing device; or create the network packet processing program, and install the network packet processing program;
wherein the network packet processing program comprises the M1 instruction sequences.

17. The apparatus for determining instruction sequences according to claim 16, wherein:
the acquiring unit is further configured to acquire X1 items, wherein a mapping between the X1 items and X1 tables is a one-to-one correspondence; and
the determining unit is further configured to determine X1 instruction sequences used to implement a table lookup function for the X1 tables, wherein a mapping between the X1 instruction sequences and the X1 tables is a one-to-one correspondence, the network packet processing program further comprises the X1 instruction sequences, and the X1 is a positive integer.

18. The apparatus for determining instruction sequences according to claim 17, wherein: the M1 instruction sequences are bijective to M1 directed edges in a valid directed graph for data flow forwarding, and the X1 tables are bijective to X1 nodes in the valid directed graph for data flow forwarding;
the valid directed graph for data flow forwarding comprises X nodes and M directed edges, wherein the M directed edges are bijective to M instruction sequences, the X nodes are bijective to X tables, the M1 directed edges are a subset in a set of the M directed edges, the X1 nodes are a subset in a set of the X nodes, and the M and the X are positive integers; and
a next instruction of an exit instruction in an instruction sequence corresponding to an incoming edge of a node i1 in the X nodes is an entry instruction in an instruction sequence used to implement the table lookup function for a table corresponding to the node i1, and a previous instruction of an entry instruction in an instruction sequence corresponding to an outgoing edge of a node j 1 in the X nodes is an exit instruction in an instruction sequence used to implement the table lookup function for a table corresponding to the node j 1, wherein the node i1 is any one node in the X nodes, and the node j1 is any one node in the X nodes.

19. The apparatus for determining instruction sequences according to claim 18, wherein:
the network packet processing program further comprises M2 instruction sequences used to support implementation of the function identified by the function identifier, wherein the M2 instruction sequences are a subset of the M instruction sequences, the M2 is a positive integer, and an intersection between a set of the M1 instruction sequences and a set of the M2 instruction sequences is an empty set.

20. The apparatus for determining instruction sequences according to claim 18 or 19, wherein:
the network packet processing program further comprises X2 instruction sequences used to support implementation of the table lookup function for the X1 tables, wherein a mapping between the X2 instruction sequences and X2 tables is a one-to-one correspondence, the X2 tables are a subset of the X tables, the X2 is a positive integer, and an intersection between a set of the X1 instruction sequences and a set of the X2 instruction sequences is an empty set.

21. The apparatus for determining instruction sequences according to claim 17 or 18, wherein a next instruction of an exit instruction in an instruction sequence in the M1 instruction sequences is an entry instruction in an instruction sequence in the X1 instruction sequences, and/or a previous instruction of an entry instruction in an instruction sequence in the M1 instruction sequences is an exit instruction in an instruction sequence in the X1 instruction sequences.

22. The apparatus for determining instruction sequences according to claim 21, wherein:
the network packet processing program further comprises M2 instruction sequences used to support implementation of the function identified by the function identifier, wherein the M2 is a positive integer, and an intersection between a set of the M1 instruction sequences and a set of the M2 instruction sequences is an empty set, wherein a next instruction of an exit point in an instruction sequence in the M2 instruction sequences is an entry instruction in an instruction sequence in the X1 instruction sequences, and/or a previous instruction of an entry instruction in an instruction sequence in the M2 instruction sequences is an exit instruction in an instruction sequence in the X1 instruction sequences.

23. The apparatus for determining instruction sequences according to claim 22, wherein:
the network packet processing program further comprises X2 instruction sequences used to support implementation of the table lookup function for the X1 tables, wherein the X2 is a positive integer, and an intersection between a set of the X1 instruction sequences and a set of the X2 instruction sequences is an empty set;
wherein a next instruction of an exit instruction in an instruction sequence in the M1 instruction sequences or the M2 instruction sequences is an entry instruction in an instruction sequence in the X2 instruction sequences, and/or a previous instruction of an entry instruction in an instruction sequence in the M1 instruction sequences or the M2 instruction sequences is an exit instruction in an instruction sequence in the X2 instruction sequences.

24. A management device, comprising:
a processor, a memory, and a network interface, wherein the processor, the memory, and the network interface are connected by using a communications bus, wherein:
the memory is configured to store program code, and transmit the program code to the processor; and
the processor is configured to execute the following steps according to the program code:
acquire a function identifier; determine M1 instruction sequences used to implement a function identified by the function identifier; and create a network packet processing program, generate a program upgrade patch by using the created network packet processing program, and send the program upgrade patch to a packet forwarding processing device through the network interface; or create a network packet processing program, and send the network packet processing program to a packet forwarding processing device through the network interface, wherein each instruction sequence in the M1 instruction sequences comprises a unique entry instruction, each instruction sequence in the M1 instruction sequences comprises a unique exit instruction, M1 is a positive integer, and the network packet processing program comprises the M1 instruction sequences.

25. The management device according to claim 24, wherein:
the processor is further configured to acquire X1 items, wherein a mapping between the X1 items and X1 tables is a one-to-one correspondence; and determine X1 instruction sequences used to implement a table lookup function for the X1 tables, wherein a mapping between the X1 instruction sequences and the X1 tables is a one-to-one correspondence, the network packet processing program further comprises the X1 instruction sequences, and the X1 is a positive integer.

26. The management device according to claim 25, wherein: the M1 instruction sequences are bijective to M1 directed edges in a valid directed graph for data flow forwarding, and the X1 tables are bijective to X1 nodes in the valid directed graph for data flow forwarding;
the valid directed graph for data flow forwarding comprises X nodes and M directed edges, wherein the M directed edges are bijective to M instruction sequences, the X nodes are bijective to X tables, the M1 directed edges are a subset in a set of the M directed edges, the X1 nodes are a subset in a set of the X nodes, and the M and the X are positive integers; and
a next instruction of an exit instruction in an instruction sequence corresponding to an incoming edge of a node i1 in the X nodes is an entry instruction in an instruction sequence used to implement the table lookup function for a table corresponding to the node i1, and a previous instruction of an entry instruction in an instruction sequence corresponding to an outgoing edge of a node j1 in the X nodes is an exit instruction in an instruction sequence used to implement the table lookup function for a table corresponding to the node j 1, wherein the node i1 is any one node in the X nodes, and the node j1 is any one node in the X nodes.

27. The management device according to claim 26, wherein the network packet processing program further comprises M2 instruction sequences used to support implementation of the function identified by the function identifier, wherein the M2 instruction sequences are a subset of the M instruction sequences, the M2 is a positive integer, and an intersection between a set of the M1 instruction sequences and a set of the M2 instruction sequences is an empty set.

28. The management device according to claim 26 or 27, wherein the network packet processing program further comprises X2 instruction sequences used to support implementation of the table lookup function for the X1 tables, wherein a mapping between the X2 instruction sequences and X2 tables is a one-to-one correspondence, the X2 tables are a subset of the X tables, the X2 is a positive integer, and an intersection between a set of the X1 instruction sequences and a set of the X2 instruction sequences is an empty set.

29. The management device according to any one of claims 26 to 28, wherein:
the valid directed graph for data flow forwarding is obtained by pruning nodes and/or directed edges in an initial directed graph for data flow forwarding, wherein the initial directed graph for data flow forwarding comprises X0 nodes and M0 directed edges, wherein a mapping between the M0 directed edges and M0 instruction sequences is a one-to-one correspondence, a mapping between the X0 nodes and X0 tables is a one-to-one correspondence, the set of the M directed edges is a subset in a set of the M0 directed edges, the set of the X nodes is a subset in a set of the X0 nodes, and the M0 and the X0 are positive integers.

30. The management device according to claim 29, wherein:
the processor is further configured to acquire an application scenario identifier, wherein the M0 instruction sequences are M0 instruction sequences identified by the application scenario identifier.

31. The management device according to any one of claims 26 to 30, wherein:
the processor is configured to create the network packet processing program based on the directed edges and the nodes in the valid directed graph for data flow forwarding.

32. The management device according to claim 25, wherein a next instruction of an exit instruction in an instruction sequence in the M1 instruction sequences is an entry instruction in an instruction sequence in the X1 instruction sequences, and/or a previous instruction of an entry instruction in an instruction sequence in the M1 instruction sequences is an exit instruction in an instruction sequence in the X1 instruction sequences.

33. The management device according to claim 32, wherein the network packet processing program further comprises M2 instruction sequences used to support implementation of the function identified by the function identifier, wherein the M2 is a positive integer, and an intersection between a set of the M1 instruction sequences and a set of the M2 instruction sequences is an empty set, wherein a next instruction of an exit point in an instruction sequence in the M2 instruction sequences is an entry instruction in an instruction sequence in the X1 instruction sequences, and/or a previous instruction of an entry instruction in an instruction sequence in the M2 instruction sequences is an exit instruction in an instruction sequence in the X1 instruction sequences.

34. The management device according to claim 33, wherein:
the network packet processing program further comprises X2 instruction sequences used to support implementation of the table lookup function for the X1 tables, wherein the X2 is a positive integer, and an intersection between a set of the X1 instruction sequences and a set of the X2 instruction sequences is an empty set;
wherein a next instruction of an exit instruction in an instruction sequence in the M1 instruction sequences or the M2 instruction sequences is an entry instruction in an instruction sequence in the X2 instruction sequences, and/or a previous instruction of an entry instruction in an instruction sequence in the M1 instruction sequences or the M2 instruction sequences is an exit instruction in an instruction sequence in the X2 instruction sequences.

35. A packet forwarding processing device, comprising:
a processor, a network processor, a memory, and a network interface, wherein the processor, the network processor, the memory, and the network interface are connected by using a communications bus, wherein:
the memory is configured to store program code, and transmit the program code to the processor;
the processor is configured to execute the following steps according to the program code: acquire a function identifier, determine M1 instruction sequences used to implement a function identified by the function identifier, create a network packet processing program, and install the network packet processing program into the network processor, wherein each instruction sequence in the M1 instruction sequences comprises a unique entry instruction, each instruction sequence in the M1 instruction sequences comprises a unique exit instruction, M1 is a positive integer, and the network packet processing program comprises the M1 instruction sequences; and
the network processor is configured to install the network packet processing program, and process, according to the network packet processing program, a network packet received from the network interface.

36. The packet forwarding processing device according to claim 35, wherein:
the processor is further configured to acquire X1 items, wherein a mapping between the X1 items and X1 tables is a one-to-one correspondence; and determine X1 instruction sequences used to implement a table lookup function for the X1 tables, wherein a mapping between the X1 instruction sequences and the X1 tables is a one-to-one correspondence, the network packet processing program further comprises the X1 instruction sequences, and the X1 is a positive integer.

37. The packet forwarding processing device according to claim 36, wherein: the M1 instruction sequences are bijective to M1 directed edges in a valid directed graph for data flow forwarding, and the X1 tables are bijective to X1 nodes in the valid directed graph for data flow forwarding;
the valid directed graph for data flow forwarding comprises X nodes and M directed edges, wherein the M directed edges are bijective to M instruction sequences, the X nodes are bijective to X tables, the M1 directed edges are a subset in a set of the M directed edges, the X1 nodes are a subset in a set of the X nodes, and the M and the X are positive integers; and
a next instruction of an exit instruction in an instruction sequence corresponding to an incoming edge of a node i1 in the X nodes is an entry instruction in an instruction sequence used to implement the table lookup function for a table corresponding to the node i1, and a previous instruction of an entry instruction in an instruction sequence corresponding to an outgoing edge of a node j1 in the X nodes is an exit instruction in an instruction sequence used to implement the table lookup function for a table corresponding to the node j1, wherein the node i1 is any one node in the X nodes, and the node j1 is any one node in the X nodes.

38. The packet forwarding processing device according to claim 37, wherein:
the network packet processing program further comprises M2 instruction sequences used to support implementation of the function identified by the function identifier, wherein the M2 instruction sequences are a subset of the M instruction sequences, the M2 is a positive integer, and an intersection between a set of the M1 instruction sequences and a set of the M2 instruction sequences is an empty set.

39. The packet forwarding processing device according to claim 37 or 38, wherein the network packet processing program further comprises X2 instruction sequences used to support implementation of the table lookup function for the X1 tables, wherein a mapping between the X2 instruction sequences and X2 tables is a one-to-one correspondence, the X2 tables are a subset of the X tables, the X2 is a positive integer, and an intersection between a set of the X1 instruction sequences and a set of the X2 instruction sequences is an empty set.

40. The packet forwarding processing device according to any one of claims 37 to 39, wherein:
the valid directed graph for data flow forwarding is obtained by pruning nodes and/or directed edges in an initial directed graph for data flow forwarding, wherein the initial directed graph for data flow forwarding comprises X0 nodes and M0 directed edges, wherein a mapping between the M0 directed edges and M0 instruction sequences is a one-to-one correspondence, a mapping between the X0 nodes and X0 tables is a one-to-one correspondence, the set of the M directed edges is a subset in a set of the M0 directed edges, the set of the X nodes is a subset in a set of the X0 nodes, and the M0 and the X0 are positive integers.

41. The packet forwarding processing device according to claim 40, wherein:
the processor is further configured to acquire an application scenario identifier, wherein the M0 instruction sequences are M0 instruction sequences identified by the application scenario identifier.

42. The packet forwarding processing device according to any one of claims 37 to 40, wherein:
the processor is configured to create the network packet processing program based on the directed edges and the nodes in the valid directed graph for data flow forwarding.

43. The packet forwarding processing device according to claim 36, wherein a next instruction of an exit instruction in an instruction sequence in the M1 instruction sequences is an entry instruction in an instruction sequence in the X1 instruction sequences, and/or a previous instruction of an entry instruction in an instruction sequence in the M1 instruction sequences is an exit instruction in an instruction sequence in the X1 instruction sequences.

44. The management device according to claim 43, wherein the network packet processing program further comprises M2 instruction sequences used to support implementation of the function identified by the function identifier, wherein the M2 is a positive integer, and an intersection between a set of the M1 instruction sequences and a set of the M2 instruction sequences is an empty set, wherein a next instruction of an exit point in an instruction sequence in the M2 instruction sequences is an entry instruction in an instruction sequence in the X1 instruction sequences, and/or a previous instruction of an entry instruction in an instruction sequence in the M2 instruction sequences is an exit instruction in an instruction sequence in the X1 instruction sequences.

45. The packet forwarding processing device according to claim 44, wherein:
the network packet processing program further comprises X2 instruction sequences used to support implementation of the table lookup function for the X1 tables, wherein the X2 is a positive integer, and an intersection between a set of the X1 instruction sequences and a set of the X2 instruction sequences is an empty set;
wherein a next instruction of an exit instruction in an instruction sequence in the M1 instruction sequences or the M2 instruction sequences is an entry instruction in an instruction sequence in the X2 instruction sequences, and/or a previous instruction of an entry instruction in an instruction sequence in the M1 instruction sequences or the M2 instruction sequences is an exit instruction in an instruction sequence in the X2 instruction sequences.

46. A communication system, comprising:
a packet forwarding processing device, configured to send a packet carrying a function identifier; and
a management device, configured to receive the packet carrying the function identifier; determine M1 instruction sequences used to implement a function identified by the function identifier; and create a network packet processing program, generate a program upgrade patch by using the created network packet processing program, and send the program upgrade patch to the packet forwarding processing device; or create a network packet processing program, and send the network packet processing program to the packet forwarding processing device, wherein each instruction sequence in the M1 instruction sequences comprises a unique entry instruction, each instruction sequence in the M1 instruction sequences comprises a unique exit instruction, M1 is a positive integer, and the network packet processing program comprises the M1 instruction sequences.
